(19) Europäisches Patentamt
European Patent Office
Office européen des brevets

(11) **EP 3 830 539 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **19746078.5**

(22) Anmeldetag: **26.07.2019**

(51) Internationale Patentklassifikation (IPC):
***G01M 3/28*** *(2006.01)*

(52) Gemeinsame Patentklassifikation (CPC):
**G01M 3/2838**

(86) Internationale Anmeldenummer:
**PCT/EP2019/070227**

(87) Internationale Veröffentlichungsnummer:
**WO 2020/021089 (30.01.2020 Gazette 2020/05)**

(54) **PRÜFVERFAHREN ZUM PRÜFEN EINES KABELS AUF DICHTHEIT SOWIE DICHTHEITSPRÜFEINRICHTUNG ZUR DURCHFÜHRUNG DES VERFAHRENS**

TESTING METHOD FOR TESTING A CABLE FOR LEAK-TIGHTNESS, AND LEAK-TIGHTNESS TESTING DEVICE FOR CARRYING OUT THE METHOD

PROCÉDÉ DE CONTRÔLE POUR CONTRÔLER L'ÉTANCHÉITÉ D'UN CÂBLE ET DISPOSITIF DE CONTRÔLE D'ÉTANCHÉITÉ POUR LA MISE EN OEUVRE DE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2018 DE 102018118208**

(43) Veröffentlichungstag der Anmeldung:
**09.06.2021 Patentblatt 2021/23**

(73) Patentinhaber: **DSG-Canusa GmbH**
**53359 Rheinbach (DE)**

(72) Erfinder:
• **KRANNICH, Jens**
**98701 Großbreitenbach (DE)**
• **DEDERICHS, Andreas**
**53925 Kall (DE)**
• **GRÜNWALDT, Sascha**
**53773 Hennef (DE)**

(74) Vertreter: **Bobzien, Hans Christoph**
**c/o GRAMM, LINS & PARTNER**
**Frankfurter Straße 3c**
**38122 Braunschweig (DE)**

(56) Entgegenhaltungen:
**DE-A1- 10 258 017     DE-A1- 102016 107 216**
**US-A- 4 811 252**

## EP 3 830 539 B1

### Beschreibung

Die vorliegende Erfindung betrifft ein Prüfverfahren zum Prüfen eines Kabels auf Dichtheit sowie eine Vorrichtung zum Durchführen des Prüfverfahrens.

Der Begriff "Kabel" ist hier zu verstehen als ein Strang aus mehreren Leitungen, die häufig eine gemeinsame Umhüllung bzw. einen Kabelmantel aufweisen können, diesen aber nicht notwendigerweise aufweisen müssen. Als "Leitung" sind die getrennt untereinander isolierten Adern eines Kabels zu verstehen, so dass eine Gruppe von zueinander parallelen Leitungen ebenfalls ein Kabel darstellen kann. Als "Ader" wird ein Draht oder eine Litze aus elektrisch leitendem Material bezeichnet. Eine "Kabelverbindung" stellt die Verbindung der Leitungen (bzw. Adern) eines ersten Kabels mit Leitungen eines zweiten oder anderen Kabels und/oder untereinander und/oder mit Kontakten eines anderen Bauteils dar.

Um mehrere Kabel oder Leitungen eines Kabels mit anderen Leitungen desselben oder eines anderen Kabels oder mit Verbindungselementen, z.B. Steckern oder Buchsen, zu verbinden, werden die Adern, insbesondere deren freie Enden, von der umgebenden bzw. diese umschließenden Isolierung befreit und mit so ebenfalls freigelegten Abschnitten anderer Adern oder einem verbindenden Verbindungskontakt elektrisch verbunden. Die verbleibenden freien, nicht-verbundenen Leitungsenden am anderen Ende des Kabels dienen dem Anschluss elektrischer Verbraucher, Energiequellen oder Sendern bzw. Empfängern von elektrischen Signalen.

Insbesondere aus der Automobilindustrie, aber auch aus anderen industriellen Bereichen, sind sogenannte "Kabelbäume" bekannt, die aus einer Mehrzahl von Kabeln, Leitungen und Verbindungen zwischen diesen bestehen und die mit bestimmten Anschlüssen oder Verbindungsstücken und bestimmten, unterschiedlichen Längen vorkonfektioniert sind.

Alle Kabelverbindungen zwischen den vorgenannten Elementen sind grundsätzlich der Gefahr einer Veränderung ihrer Kontaktwiderstände und damit einer Einschränkung ihrer Funktionsfähigkeit ausgesetzt, wenn die Isolation der Adern zum Herstellen der Verbindung entfernt wurden, so dass die elektrischen Kontaktstellen der Umgebung insbesondere dem Sauerstoff der Atmosphäre oder Flüssigkeiten, wie Wasser oder auch aggressiven Medien ausgesetzt sind. Die Kontaktstellen werden daher bei vielen Anwendungen, in denen es einen Ausfall oder eine Verschlechterung des elektrischen Kontakts möglichst dauerhaft zu vermeiden gilt, mit Kunststoff, z.B. einem Schrumpfschlauch oder anderem isolierenden Material umhüllt und somit permanent gegenüber der Umgebung abgedichtet, so dass ein Eintritt von Luft und umgebenden Medien wirksam verhindert wird.

Die Güte dieser Verbindung bzw. die Abdichtung zwischen einem Kabelende und einem mit einem Kabel verbundenen Element, z.B. ein Stecker, ein Kabelschuh, eine Tülle oder dergleichen muss vor dem Verbau im Rahmen der Materialprüfung auf Funktionsfähigkeit und Dichtheit überprüft werden. Deshalb werden solche Kabel mit einem mit diesem verbundenen Element auch als Endkabel bezeichnet.

Mit einer Vorrichtung zur Dichtheitsprüfung solcher Kabel bzw. Leitungen, insbesondere mittels eines umschließenden Schrumpfschlauchs zur Abdichtung des mit dem Kabelende verbundenen Elements, also eines Endkabels, befasst sich die vorliegende Erfindung.

### Stand der Technik

Das wohl älteste und bekannteste Prüfverfahren zur Dichtheitsprüfung ist der sogenannte "Bubble Test", bei welchem ein auf Dichtheit zu prüfender Prüfkörper, z.B. ein von einem Schrumpfschlauch umgebenes Kabel, in einen Wasserbehälter getaucht wird, sodann mit Druck beaufschlagt wird und mittels Sichtprüfung von einem Werker auf den Austritt von Luftblasen untersucht wird. Dieser Bubble Test ist sehr präzise und wird insofern noch immer gerne verwendet.

Das deutsche Gebrauchsmuster DE 20 2016 104 484 U1 offenbart eine Vorrichtung zur Durchführung einer Dichtheitsprüfung mit einer durch einen Boden und einem Deckel gebildeten Druckkammer zur Aufnahme der zu prüfenden Leitung, die mit Überdruck beaufschlagt wird und wobei sodann außerhalb der Druckkammer über einen Leckschnüffler enthaltenes oder austretendes Testgas erfasst wird.

Aus dem deutschen Gebrauchsmuster DE 203 08 615 U1 ist ferner ein Leck-Messcomputer für Druckbereiche zwischen -1 bar Unterdruck und 100 bar Überdruck bekannt, der Einrichtungen zum Erfassen des Fülldrucks und der Füllzeit aufweist.

Aus der DE 10 2016 107 216 A1 ist eine Vorrichtung zur Dichtigkeitsprüfung einer Komponente eines Kabelbaums bekannt, die einen evakuierbaren Prüfbehälter umfasst, der über einen deckelartigen Prüfadapter verschließbar und zum Anschließen bzw. Hindurchfädeln der Komponenten derart eingerichtet ist, dass die Komponente mit dem Inneren des Prüfbehälters fluidisch verbunden ist oder ein erster Teil im Inneren des Prüfbehälters und ein zweiter Teil auf einer Außenseite des Prüfbehälters angeordnet ist. Bei dieser Lösung wir das Leitungsende mit dem auf Dichtigkeit zu prüfenden Stecker in den Prüfbehälter eingebracht und geprüft. Diese Vorrichtung ist deshalb relativ groß.

Aus der US 4,811,252 ist ein Differenzdruckverfahren bekannt, bei welchem ein zu prüfender Prüfbehälter mit einem Prüfvolumen und ein Vergleichsbehälter mit einem Vergleichsvolumen gleicher Größe wie das Prüfvolumen druckbeaufschlagt werden. Über einen zwischen dem Prüfbehälter und dem Vergleichsbehälter angeordneten Differenzdrucksensor wird eine Druckdifferenz zwischen dem Prüfbehälter und dem Vergleichsbehälter erfasst.

Weitere Vorrichtungen, die mit einem Differenzdruckverfahren arbeiten sind bekannt aus der CN 107884143 A, JP 05215588 A, US 8,201,438 B1.

Ein Messverfahren und eine Messvorrichtung anderer Art sind bekannt aus der DE 20 2016 104 484 U1.

## Nachteile am Stand der Technik

Der Bubble Test bzw. eine Vorrichtung zu dessen Durchführung ist aufwendig, weil Wasser benötigt wird, was im Produktionsprozess häufig nicht gewünscht ist. Ferner ist die Prüfung von dem Prüfer abhängig, der auch kleinste Blasenaustritte erfassen muss.

Bekannte Messvorrichtungen erfassen eine Leckage eines Bauteils über einen Druckverlust in einem mit einem Prüfdruck relativ zum Außendruck beaufschlagten Behälter, an dem der Prüfkörper angeschlossen wird. Der Prüfkörper kann auch selbst den Behälter darstellen. Um eine möglichst kleine Leckrate zu erfassen, muss das Volumen möglichst klein sein.

Relativ genau ist das Differenzdruckverfahren. Dabei wird der Druckunterschied zwischen einem Prüfvolumen und einem Referenzvolumen mittels einem Differenzdruckmessgerät gemessen. Da der Druckunterschied relativ klein ist, kann ein Messgerät mit einem kleinen Messbereich eingesetzt werden, so dass Messfehler relativ klein gehalten werden. Nachteilig an dem Druckdifferenzverfahren ist der relative große Aufwand des Messaufbaus mit einem Referenzvolumen und den dazu gehörenden Steuerventilen. Ein weiterer Nachteil besteht darin, dass keine Aussage über die Größe der Leckrate gemacht werden kann.

Etwas ungenauer ist das Druckdifferenzverfahren (Relativdruck, Druckanstieg, Druckabfall), zu dessen Durchführung kein Referenzvolumen benötigt wird. Bei diesem Verfahren wird der Druckverlust über einen bestimmten Zeitraum gemessen, was den Einsatz eines Messgerätes mit einem größeren Messbereich voraussetzt. Daraus folgt, dass die Auflösung kleiner und der Messfehler des Systems grösser ist. Der Vorteil der Druckdifferenzverfahrens ist der relativ einfache Aufbau. Um aber eine Aussage zur Leckrate machen zu können, muss das Volumen des Messkörpers bekannt sein. Dieses ist aber in den meisten Fällen nicht der Fall. Bisherige Messverfahren berücksichtigen nur den Druckunterschied bezogen auf einen vorgegebenen Zeitraum (Prüfzeitraum) oder erfassen nachströmende Gase. Diese bekannten Verfahren laufen nach dem folgenden Messverfahren ab: Evakuieren eines Prüfraums, Beruhigen des Prüfraums, Messen des Drucks, Warten, nochmaliges Messen des Drucks sowie Differenzbildung zwischen der ersten und der zweiten Druckmessung.

Ferner kann eine Messung mittels Differenzdruckprüfung gemäß DIN EN 1779 erfolgen, wobei der Prüfkörper mit einem Referenzkörper über eine Art Siphon verbunden ist. Die Flüssigkeit in dem Siphon schlagt dann zu der undichten Seite ähnliche einer Waage aus.

## Aufgabe / Technisches Problem

Ausgehend von diesem Stand der Technik liegt der Erfindung die Aufgabe zugrunde, diese Nachteile zumindest teilweise zu vermeiden und insbesondere eine einfach aufgebaute, robuste und leicht zu bedienende Dichtheitsprüfeinrichtung und Dichtigkeitsprüfverfahren vorzusehen.

Insbesondere soll die Erfindung ein Messverfahren und eine Vorrichtung zu dessen Durchführung bereitstellen, welches auf einfache Weise das Erzeugen des Prüfdrucks mit gleichzeitiger Berechnung der Prüfvolumens in Einklang ermöglicht, weil dieses die für eine anschließende Bestimmung einer Leckrate mittels eines Druckdifferenzverfahrens ist.

## Erfindung

Diese Aufgabe wird bereits durch die Merkmale der unabhängigen Ansprüche gelöst; bevorzugte, aber nicht zwingende Weiterentwicklungen sind in den Unteransprüchen wiedergegeben. Der Gegenstand der Erfindung wird durch die Ansprüche definiert.

Die Erfindung macht sich somit die während der Entwicklung gewonnene Erkenntnis zunutze, dass eine absolute Dichtheit im praktischen Sinne eigentlich nicht existiert und dieses für alle praktischen Anwendungsfälle auch nicht erforderlich ist. Notwendig ist vielmehr für den Normalgebrauch die Einhaltung einer akzeptablen, definierten Leckrate, in Kraftfahrzeugen eine im Wesentlichen wasser- oder dampfdichte Ausgestaltung, also ein Vermeiden von Tropfen, was einer Leckage von 1 $cm^3$ Gasverlust in 100 Sekunden bei einem Druckunterschied von 1000 mbar entspricht. Bei anderen Druckunterschieden kann die Leckrate darauf bezogen/umgerechnet werden. Unter Umständen ist auch eine dampfdichte Ausgestaltung zweckmäßig, welches einem Gasverlust von 1 $cm^3$ in 15 Minuten entspricht.

Mit dem Begriff Prüfkörper ist im Sinne der Erfindung vorderseitig offene Kabel mit der zur prüfenden Kabelverbindung am hinteren Ende gemeint. Das offene Vorderende des Prüfkörpers wird vereinfacht als "Einsteckende" und das auf Dichtigkeit zu prüfende Hinterende als "Prüfende" bezeichnet.

Das Prüfverfahren ist insbesondere dadurch gekennzeichnet, dass ein offenes und ggf. abisoliertes Vorderende des Prüfkörpers, also Kabels in einen Adapter eingeführt wird, dass der Adapter mit dem darin aufgenommenen Prüfkörper gegenüber der Umgebung abgedichtet wird, dass zunächst das Volumen im inneren der so gebildeten Messzelle automatisch ermittelt wird.

Die Messzelle umfasst den Raum innerhalb des Prüfkörpers und des Adapters mit dem angeschossenen Drucksensor bis zum Ventil.

Da das Volumen des Adapters, des Drucksensors und die Leitung bis zum Ventil konstant sind, wird somit einfach das Bezugsvolumen innerhalb des Prüfkörpers bestimmt. Dieses Bezugsvolumen kann also aus dem aus der Messzelle extrahierten Volumen ermittelt werden und liefert erstmalig eine Bezugsgröße, auf welche sich eine anschließende Druckdifferenzprüfung beziehen kann, um eine Aussage über die Größe der Leckage zu treffen.

Während dem Ermitteln des Bezugsvolumens wird sodann über eine gewisse Prüfzeit ein Prüfdruck in Form eines Unter- oder Überdrucks auf den Prüfkörper bzw. das Kabel aufgebracht und eine Leckrate ermittelt, indem in das Kabel bzw. die Kabelverbindung nachströmendes Volumen über die Messung der Druckänderung erfasst wird.

Erfindungsgemäß wird also jede Leckage im Prüfkörper ermittelt.

Der Erfindung liegen die folgenden Erkenntnisse zu Grunde:

Das Volumen des Hauptkolbens $V_1$ des Pneumatikzylinders bzw. der Druckerzeugungseinheit bis zum Ventil lässt sich über die bekannte Geometrie und den Wegsensor oder die Bewegung eines Stellmotors bestimmen.

Unter dem "Volumen des Prüfkörpers" ist nur der innere, gasgefüllte Bereich des Prüfkörpers zu verstehen.

Der Prüfkörper kann unterschiedlich weit in den Adapter eingeführt werden, sodass sich ein freies Volumen des Adapters aus der Einstecktiefe des Prüfkörpers ergibt.

Das Bezugsvolumen $V_2$ umfasst das freie Volumen des Adapters und den gasgefüllten Bereich innerhalb des Prüfkörpers, also

$$V_2 = V_{\text{Adapter}} + V_{\text{Prüfkörper}}$$

Dieses Bezugsvolumen $V_2$ lässt sich unter der Annahme einer konstanten Temperatur über eine Variation des Drucks am Betätigungskolben $p_1$, welcher mittels dem Druckwertmessführs am Adapter $p_s$ gemessen werden kann, mittels der idealen Gasgleichung ($p*V = const$) ermitteln aus:

$$p_{S,1} * (V_{1,1} + V_2) = p_{S,2} * (V_{1,2} + V_2).$$

Es sind: Ps,x = Druck am Sensor zum Zeitpunkt x

$$V_{1,x} = \text{Volumen des Hauptkolbens zum Zeitpunkt x}$$

Der Zeitpunkt 1 ist Außendruck und der Zylinder ist in Ausgangsstellung. Zum Zeitpunkt 2 ist der Zylinder betätigt und hat Arbbeitsdruck erzeugt.

Damit erlaubt die Erfindung ohne einen umgebenden, größeren Referenzkörper aus einer Volumendifferenz bezogen auf das Bezugsvolumen auf eine mögliche Leckage im Prüfkörper zu schließen, und zwar durch Messen einer Druckdifferenz mit dem Drucksensor. Die Volumendifferenz wird insofern mittelbar über die Druckdiffernz und das normierte Bezugsvolumen berechnet.

Nach Ermitteln des Bezugsvolumens $V_2$ wird das Ventil geschlossen und die Berechnung der Leckage Q erfolgt aus

$$Q = \frac{(p_{S,,4} - p_{S,3}) * V_2}{t_4 - t_3}$$

Tx = Zeitpunkt x ist.

Im Gegensatz zum Stand der Technik wird damit kein Referenzvolumen außerhalb von dem Prüfkörper benötigt. Dieses reduziert den Bauraum der Prüfeinrichtung und ermöglicht eine schnelle Prüfung.

Die Erfindung erzeugt somit mit dem Bezugsvolumen in der Meßzelle zu Beginn der Prüfung ein eigenes Referenz- bzw. Bezugssystem. Im Gegensatz zu den Differenzdruckverfahren zur Prüfung im Stand der Technik, die eine Druckdifferenz zwischen vorbestimmten Behältern messen, benötigt die Erfindung keinen solchen Referenzbehälter.

Die Verfahren aus dem Stand der Technik prüfen ferner nur, ob eine Abdichtung gut oder schlecht ist, geben aber keinen Zahlenwert über die Güte einer Leckage an.

Die Erfindung liefert damit mit wenig Aufwand eine Leckrate als Zahlenwert, welche Auskunft über die Qualität des Prüfkörpers gibt.

Die Leckrate ist demnach das über eine vorgegebene Zeiteinheit, die Prüfzeit ein- oder ausströmende Volumen, für welche folgende Formel gilt:

**Leckrate (Q) = Volumen (V) x Druckunterschied ($\Delta$P)/Prüfzeit (t).**

Die Erfindung beruht somit auf der Erkenntnis, dass dicht im Sinne der Erfindung nicht als absolut dicht zu verstehen ist, sondern eher je nach Anwendungsfall und Produkt unterschiedlich definiert werden kann i.S. einer akzeptierten Leckrate. Insofern handelt es sich genau genommen um ein Verfahren zur Bestimmung einer zulässigen Leckrate in einem Prüfkörper sowie eine Dichtheits- bzw. Leckrateprüfgerät. Im Gegensatz zu bestehenden Messverfahren prüft das erfindungsgemäße Prüfverfahren mit dieser akzeptierten Leckrate das in den Prüfkörper nachströmende Volumen in der Prüfzeit. Insofern ist erstmalig eine Klassifizierung innerhalb bestimmter Vorgaben möglich, so dass also in Abhängigkeit vom Anwendungsfall bzw. zu prüfendem Produkt festgelegt werden kann, welche Leckrate noch akzeptabel ist.

Die nachfolgende Tabelle gibt akzeptierte Leckraten für verschiedene Anwendungsfälle wieder, welche insofern die akzeptierten Leckraten (Q) darstellen können:

| Lochdurchmesser | Leckrate in mbar x l/s | generelle Leckrate-Beschreibung ($\Delta$ p = $10^5$ Pa) | Gasleckage-Beschreibung ($\Delta$ p = $10^5$ Pa) |
|---|---|---|---|
| $\approx$ 1 mm | $10^2$ | Wasser läuft aus | |
| $\approx$ 300 $\mu$m | $10^1$ | | |
| $\approx$ 100 $\mu$m | $10^0$ | Tropfender Wasserhahn | $\approx$ 1 cm$^3$ Gasverlust/Sek. |
| $\approx$ 30 $\mu$m | $10^{-1}$ | | $\approx$ 1 cm$^3$ Gasverlust/10 Sek. |
| $\approx$ 10 $\mu$m | $10^{-2}$ | wasserdicht (tropft nicht) | $\approx$ 1 cm$^3$ Gasverlust/ 100 Sek. |
| $\approx$ 3 $\mu$m | $10^{-3}$ | dampfdicht (Schwitzen) | $\approx$ 1 cm$^3$ Gasverlust/15 Min. 1 Gasbläschen/Sek. |
| $\approx$ 1 $\mu$m | $10^{-4}$ | bakteriendicht | $\approx$ 1 cm$^3$ Gasverlust/3 Std. |
| $\approx$ 300 nm | $10^{-5}$ | benzin- und öldicht | $\approx$ 1 cm$^3$ Gasverlust/Tag |
| $\approx$ 100 nm | $10^{-6}$ | virendicht | $\approx$ 1 cm$^3$ Gasverlust 10 Tage |
| $\approx$ 30 nm | $10^{-7}$ | gasdicht | $\approx$ 1 cm$^3$ Gasverlust/100 Tagen |
| $\approx$ 10 nm | $10^{-8}$ | virendicht (gesichert) | $\approx$ 1 cm$^3$ Gasverlust/3 Jahren |
| $\approx$ 3 nm | $10^{-9}$ | gasdicht (gesichert) | $\approx$ 1 cm$^3$ Gasverlust/30 Jahren |
| $\approx$ 1 nm | $10^{-10}$ | absolut dicht (technisch) | $\approx$ 1 cm$^3$ Gasverlust/300 Jahren |
| $\approx$ 0,3 nm | $10^{-11}$ | | $\approx$ 1 cm$^3$ Gasverlust/3000 Jahren |
| Zusammenhang zwischen der Lochgröße und zugehöriger Leckrate (Abschätzung) | | | |

Erfindungsgemäß können als Prüfdruck ein Über- und ein Unterdruck aufgebracht werden.

Das Prüfverfahren kann, obwohl dieses nicht in den Ansprüchen niedergelegt ist, die folgenden Verfahrensschritte umfassen:

- Einspannen des auf Dichtheit zu prüfenden Prüfkörpers, insbesondere eines Endkabels, mit dem offenen Prüfende in einen Adapter einer Messzelle der Dichtheitsprüfeinheit,
- Aufbringen eines Prüfdrucks auf das Prüfsystem umfassend den Adapter, das innere des Prüfkörpers und die Verbindungsleitung von dem Adapter bis zu der Druckerzeugungseinheit, insbesondere ausgebildet als Kolbenvakuumpumpe und somit den Prüfkörper,
- Erstes Beruhigen,
- Bestimmen des Bezugsvolumens mit 2 Messwerten und Berechnung mittels der idealen Gasgleichung;
- kann bereits mehrere Abbruchkriterien beinhalten
- Absperren der Messzelle vom Druckerzeuger mittels eines Ventils,

- zweites Beruhigen des Systems sowie

- Druckmessung des Prüfkörpers bis zum Ablauf einer definierten Abbruchzeit oder eine definierten Druckdifferenz.

Das Messen des Volumens im Prüfkörper erfolgt über das Ermitteln der Druckänderung, insbesondere mittels eines Drucksensors und der Berechnung des Volumens über die ideale Gasgleichung.

Bei der bevorzugten Ausführungsform, die nicht Teil der Ansprüche ist, erfolgt die Volumenbestimmung des Bezugsvolumens, indem zunächst von einer Druckerzeugungseinheit ein Prüfdruck erzeugt wird.

Vorzugsweise umfasst diese Druckerzeugungseinheit eine Kolbenvakuumpumpe mit einem Hauptkolben, der über zwei seitlich daneben angeordnete Betätigungskolben bewegt wird und dessen Verstellweg gemessen wird, z.B. über einen Wegmessschreiber. Da Volumen des Pneumatikzylinders mindestens das 1,5-fache, vorzugsweise das 2,5-fache des aus dem Prüfkörper zu evakuierenden Volumens beträgt, wobei dieses grds. abhängig ist von der Auflösung (Feinheit) des Messinstrumentes, steht der erzeugte Prüfdruck auch nach dem Trennen der den Prüfkörper aufnehmenden Messzelle von der Druckerzeugungseinheit weiterhin an dem Prüfsystem, insbesondere dem Prüferkörper an.

Eine besser einstellbare Weiterentwicklung umfasst zur Betätigung des Hauptkolbens der Kolbenvakuumpumpe einen elektrischen Motor, insbesondere einen Schrittmotor. Dieser Motor hilft den mitunter auftretenden Slip-Stick-Effekt zu vermeiden, der Messungenauigkeiten hervorrufen kann. Zudem ist der Hauptkolben des Arbeitszylinders über den Motor, insbesondere der Schrittmotor, wesentlich genauer einstellbar.

Bei einer besonders bauraumoptimierten Ausführungsformist der Hauptkolben der Kolbenvakuumpumpe geteilt, umfasst also zwei oder mehr Teilkolben, die untereinander zur Bildung eines Gesamtkolbenvolumens miteinander verbunden sind. Bei der Verwendung eines Motors zur Betätigung der einzelnen Teilkolben kann dieser zwischen zwei Teilkolben angeordnet sein und gleichzeitig mehrere Teilkolben betätigen. Mit dieser Ausgestaltung kann die Bauhöhe bzw. Länge der Kolben beliebig angepasst werden, bei der Teilung eines Hauptkolbens auf zwei Teilkolben um die Hälfte reduziert werden, sodass die Druckerzeugungseinheit besser in dem einen Gehäuse untergebracht werden können. Die Verwendung eines Schrittmotors ist mit dem weiteren Vorteil verbunden, dass kein Wegmessschreiber benötigt wird.

Nach Aufbringen des Prüfdrucks auf das System mit der Messzelle und dem darin aufgenommenen Prüfkörper wird somit das Volumen im Pneumatikzylinder bestimmt, z.B. mittels des Wegmessschreibers, welcher jede Kolbenbewegung des Hauptkolbens des Pneumatikzylinders registriert, also auch eine mögliche Veränderung nach dem initialen Aufbringen des Prüfdrucks. Da die geometrischen Parameter des Hauptkolbens des Pneumatikzylinders bekannt sind, kann über den Verstellweg eine genaue Berechnung der evakuierten und/oder nachströmenden Volumina unter Berücksichtigung des individuellen Drucks erfolgen.

Zur Verbesserung der Messergebnisse wird die Volumenbestimmung des Prüfkörpers mindestens 2 Mal vorgenommen.

An die Volumenbestimmung des Prüfkörpers schließt sich die Bestimmung der zulässigen Leckrate des Prüfkörpers mittels der Druckdifferenzprüfung an.

Zur Verbesserung der Messgenauigkeit hat es sich als zweckmäßig erwiesen mindestens eine, vorzugsweise mehrere Beruhigungszeiten vorzusehen, innerhalb derer sich das System beruhigen kann, also ausgleichen kann. Diese Beruhigungszeiten dienen insbesondere zur Kompensation von Änderungen der Temperatur in der Luft (bei der Evakuierung fällt die Temperatur dramatisch), des Umgebungsdrucks, der Luftfeuchte und damit die Luft an dem äußersten Ende der Leitung nachkriechen bzw. strömen kann. Vorzugsweise wird vor der Volumenbestimmung eine erste Beruhigungszeit vor dem eigentlichen Messbetrieb zum Bestimmen der Leckrate eine zweite Beruhigungszeit bzw. Ruhephase vorgesehen.

Eine Beruhigungszeit erfolgt vorzugsweise nach dem Abriegeln der Messzelle. Die Dauer der Beruhigungszeit(en) kann einstellbar sein.

Ausführungsformen, die nicht Teil der vorliegenden Ansprüche sind, umfassen die Möglichkeit, einzelne oder all der verschiedenen Prüf- und/oder Beruhigungszeiten einzustellen.

Vorzugsweise betragen die Beruhigungszeiten etwa 10 bis 240 Sekunden.

Ferner kann die zu prüfende bzw. azeptierende Leckrate für den jeweiligen Anwendungsfall bzw. auf das zu prüfende Produkt einstellt werden.

Bei der Berechnung der Leckrate können zudem eine oder mehrere der folgenden Gruppe von Einflussgrößen berücksichtigt bzw. erfasst werden:

- Temperatur;

- Umgebungsdruck;

- Änderungen des Umgebungsdrucks vor und während der Prüfung;

- Druckunterschied;

- Volumen des Prüfkörpers;

- der zeitliche Verlauf des evakuierten Volumens sowie

- evtl. auch die Luftfeuchtigkeit.

Das Prüfverfahren, das nicht Teil der Ansprüche ist, kann durch Betätigen der Taste "Start" initiiert werden, so dass der nachfolgende Prozessablauf vollautomatisch abläuft:

1. Abdichten des Prüfkörpers gegenüber der Umgebung durch einen Adapter ausgebildet zur Aufnahme des offenen Einsteckendes des Prüfkörpers.

2. Aufbringen von Prüfdruck (Über- oder Unterdruck) auf den Adapter mittels einer Drückerzeugungseinheit.

3. Erstes Beruhigen, T1, vorzugsweise 10 bis 180 Sekunden.

4. Erfassen von 2 verschieden Druckwerten unter Zwischenschaltung einer Beruhigungszeit T2 und Ermitteln des Bezugsvolumens $V_2$;

5. Trennen der Druckerzeugungseinheit von der Messzelle (ab V3 = Umschaltpunkt), so dass der aufgebrachte Prüfdruck im Prüfkörper ansteht; besonders bevorzugt beträgt das Vakuum bzw. der Unterdruck vorzugsweise ca. 500-700 mbar.

6. Weitere Beruhigungszeit, von vorzugsweise 10 Sekunden.

7. Starten des Messzyklus, wobei vorzugsweise auch der Umgebungsdruck erfasst wird.

8. Kontinuierliches Erfassen ("Wegschreiben") der relevanten Drücke, insbesondere des Umgebungs- und des Leitungsdrucks während des Messzyklus.

9. Der Messzyklus ist beendet, wenn der einstellbare Wert T4 abgelaufen ist, der vorzugsweise 180 Sekunden beträgt, oder eine bestimmte Druckdifferenz erfasst wird, z.B. 5 mbar.

10. Bestimmen der Leckrate als aus Druckdifferenz i.V.m. dem Volumen in der Messzelle und damit Prüfkörper .

11. Umrechnen der Leckrate auf eine Leckrate von ca. 1000 mbar, also nahe Umgebungsdruck "Normleckrate".

12. Klassifizieren des Prüfkörpers aufgrund vorgegebener, produktspezifischer Parameter als dicht oder undicht im Sinne der jeweilig festgelegten Anforderung.

Verfahrensgemäß wird bei jeder Ermittlung eines Volumens (V2, V3) der jeweilige Umgebungsdruck mit berücksichtigt, vorzugsweise durch einen zentralen Umgebungsdrucksensor.

Ab Schritt 3. kann eine Vorselektion eines defekten Prüfkörpers erfolgen, wenn z.B. wegen Undichtigkeiten kein Vakuum erzeugt werden kann.

Bei einer Leckage im Prüfkörper strömt im Zeitraum der Evakuierung Umgebungsluft nach und kann somit das ermittelte Ergebnis der Volumenmessung verfälschen. Bei der Entwicklung der Erfindung hat sich gezeigt, dass aufgrund einer Rückbetrachtung, beginnend ab dem Zeitpunkt, wo das Volumen bezogen auf einen Zeitintervall linear ansteigen, ein nahezu reales oder wahres Volumen (Bezugsvolumen ohne Leckage) berechnet werden kann. Oder anders ausgedrückt: Wenn aus der ermittelten Kurve aus Druck und Volumen bezogen auf das gleichbleibende Zeitintervall eine lineare Steigung entsteht, kann dieser Wendepunkt zur Berechnung des wahren Volumens (Bezugsvolumen ohne Leckage) verwendet werden.

Bei der bevorzugten Ausführungsform, die nicht Teil der Ansprüche ist, umfasst die Druckerzeugungseinheit mindestens einen Pneumatikzylinder mit mindestens einem Hauptkolben zur Erzeugung von Druck bzw. Unterdruck, der von mindestens einem vorzugsweise zwei Betätigungskolben angetrieben wird.

Es müssen nicht notwendigerweise alle Verfahrensschritte durchlaufen werden. Auch kann mittels geeigneter Abbruchkriterien ein vorzeitiger Abbruch des Messzyklus erfolgen, z.B. bei Überschreiten einer zuvor definierten Druckdifferenz. Zum Kalibrieren können Normlecks verwendet werden, die Rückschlüsse auf die Qualität der Messung liefern.

Wesentlich ist demnach, dass das erfindungsgemäße Verfahren und die Dichtheitsprüfeinrichtung zu dessen Durchführung das Bezugsvolumenselbstständig zu Beginn des Prüfzyklus ermittelt wird, womit Rückschlüsse auf den Leitungsquerschnitt und die Leitungslänge möglich sind, und zwar bevorzugt durch Abbildung in einer Tabelle mit Erfahrungswerten in der Dichtheitsprüfeinrichtung bzw. der Software. Die Rückschlüsse sind für den zeitlichen Prüfablauf und zur Präzisierung vom gemessenen Volumen von Belang.

Das Prüf- bzw. Messverfahren hat zahlreiche Vorteile. Da kein Wasser benötigt wird, lässt sich das Messverfahren einfach und gut in einen Produktionsablauf integrieren. Zudem ist das Messverfahren mit 180 bis 480 Sekunden in Abhängigkeit von dem Leitungsquerschnitt des Prüfkörpers, insbesondere 240 Sekunden sehr schnell, wobei auch hier ein Abbruchkriterium berücksichtigt werden kann.

Die Prüfzeit kann reduziert werden durch Vorsehen mehrerer Messzellen, so dass also eine parallele Prüfung von mehreren Prüfkörpern durchgeführt werden kann.

Das Prüfverfahren ermöglicht insofern mit vertretbarem wirtschaftlichen Aufwand eine absolute Fehlertoleranz in dem Sinne, dass eine 100 prozentige Prüfung der Produkte durchführbar ist, womit nicht nur gemeint ist, dass jedes Produkt geprüft werden kann, sondern auch, dass auch ein eigentlich fehlerfreies Produkt, aber bedingt durch einen Defekt oder einer Fehlbedienung der Messeinrichtung, so z.B. einer Undichtheit des Adapters, das System den Prüfling als fehlerhaft darstellt, so dass in jedem Fall ein fehlerhaftes Produkt mit Sicherheit ausgeschlossen wird. Es wird also im Zweifelsfall eher ein sogenannter "Pseudoausschuss" erzeugt, also ein eigentlich fehlerfreies Produkt als fehlerhaft angegeben, was durch eine zweite Prüfung validiert werden könnte.

In der einfachsten Ausführungsform umfasst die Dichtheits- bzw. Leckrateprüfeinrichtung mindestens einen einseitig offenen Adapter mit einem Aufnahmeende ausgebildet zur abdichtenden Aufnahme eines vorderseitig offenen, also innenseitig zugänglichen Einsteckendes eines Kabels bzw. Prüfkörpers, insbesondere einer auf Dichtheit zu prüfenden Leitung mit einem an einem hinteren Ende über eine Kabelverbindung verbundenes Element, z.B. ein Stecker, einer Tülle oder dergleichen, mindestens eine Druckerzeugungseinheit, insbesondere ausgebildet als Vakuumkolbenpumpe, zur Erzeugung eines Unter- oder Überdrucks in dem Adapter sowie einer Auswertungseinheit zur Erfassung einer Leckrate des Prüfkörpers in einem Prüfzeitraum.

Die Dichtheitsprüfeinrichtung umfasst maßgeblich die folgenden Bestandteile:

- mindestens eine Messzelle mit Adapter, Ventil und Drucksensor),

- mindestens eine Druckerzeugungseinheit (Vakuumerzeuger/Überdruckerzeuger) mit einer Wegmesseinrichtung, vorzugsweise ausgebildet als Kolbenvakuumpumpe ,

- einem Drucksensor, auch zur Erfassung des Umgebungsdrucks, sowie

- der Auswertesoftware.

Die Dichtheitsprüfeinrichtung besteht fast ausschließlich aus "handelsüblichen", also am Markt erhältlichen Bauteilen zusammengesetzt ist, also einem Pneumatikzylinder, ein Drucksensor, einem Ventil, vorzugsweise einem elektromechanischen Pneumatikventil, insbesondere einem 3/2-Wegeventil, den entsprechenden Leitungen, so dass also keine Sonderbauteile benötigt werden.

Die einzige Besonderheit liegt in dem erfindungsgemäß ausgebildeten Adapter, der ausgebildet ist zur Aufnahme des Prüfkörpers. Ansonsten werden handelsübliche im Sinne von standardisierten Bauteilen verwendet, was die Kosten reduziert und die Wartung des Systems des Nachkaufs von Ersatzteilen sehr günstig beeinflusst.

Ferner ist ein dem Adapter zugeordnetes Ventil vorgesehen, welches den Adapter von der Druckerzeugungseinheit trennt bzw. abschaltet.

Der Adapter ist also ausgebildet, um den Prüfkörper bzw. das Kabel gegenüber der Umgebung abzudichten bzw. abgedichtet aufzunehmen. Vorzugsweise weist der Adapter ein sich entlang einer Adapterlängsachse erstreckendes Adaptergehäuse mit einer an einem Adaptervorderende ausgebildeten und sich vorzugsweise entlang der Adapterlängsachse erstreckenden Einstecköffnung auf. Vorzugsweise torusförmig bzw. ringförmig ausgebildete Dichtungsringe sind mit ihren mittleren Durchgangsöffnungen kollinear zur Adapterlängsachse in dem Adaptergehäuse aufgenommen und sind über einen relativbeweglich in dem Adaptergehäuse aufgenommenen Kolben bzw. eine Druckplatte in dem Adaptergehäuse komprimierbar. Bevorzugt ist der Kolben pneumatisch betätigt über eine Steuerleitung. Bei der Kompression der Dichtungsringe über den Kolben in Adapterlängsrichtung werden diese Dichtungsringe komprimiert und dehnen sich zur mittigen Einstecköffnung hin aus. Der in die Einstecköffnung eingebrachte Prüfkörper wird so über die Dichtungsringe umfänglich radial abgedichtet.

Bei einer bevorzugten Weiterentwicklung umfasst der Adapter eine Rückstellfeder zum Vereinfachen des Öffnens bzw. der Freigabe des Prüfkörpers auch bei größeren Prüfkörpern, z.B. nach dem Reduzieren des Drucks auf die Steuerleitung zum Schließen des Adapters. Vorzugsweise ist diese Rückstellfeder zwischen dem äußeren Adaptergehäuse und dem relativbeweglich in diesem Adaptergehäuse aufgenommenen Kolben angeordnet. Bei einer besonders bevorzugten Ausführungsform liegt diese Druckfeder mit einem Hinterende gegen einen Bund oder eine Platte des Kolbens an und sitzt mit einem Vorderende in einem Ringraum oder einen Federsitz an dem Adaptergehäuse.

Das Kabel, insbesondere ein Endkabel, also der Prüfkörper wird mit einem ggf. abisolierten und somit offenen Vorderende "Einsteckende" in mindestens eine Einsecköffnung eines Adapters der Dichtheitsprüfeinrichtung eingebracht. Das in den Adapter eingebrachte Einsteckende sollte frei von Beschädigungen und Schmutz sein und es sollte sich auch nicht um ein deformiertes Leitungsende handeln.

Bevorzugt umfasst der Adapter mehrere Dichtungsringe, und zwar bevorzugt in Adapterlängsrichtung hintereinander angeordnet, vorzugsweise zwei Dichtungsringe. Als besonders zweckmäßig hat sich die Verwendung von Dichtungsringen aus Chloropren-Kautschuk- Neopren erwiesen.

Eine besonders gleichmäßige Komprimierung und somit Lebensdauer der Dichtungsringe wird erzielt, wenn die Dichtungsringe von vorzugsweise kreisringförmigen Druckscheiben außenseitig eingefasst sind. Vorzugsweise ist auch zwischen angrenzenden Dichtungsringen eine solche Druckscheibe angeordnet. Diese Ausgestaltung erzeugt eine gleichmäßige Flächenpressung auf die Dichtungsringe, vereinfacht bzw. verbessert die Komprimierung und verlängert somit deren Lebensdauer.

Für die Messung verschiedener Leitungsquerschnitte und Anpassung an verschiedene Chargen müssen somit nur noch unterschiedlich große Adapter vorgesehen werden, die deshalb vorzugsweise auswechselbar ausgestaltet sind.

Der Adapter kann mehrteilig, vorzugsweise zweiteilig ausgebildet sein mit einem Außenteil sowie ein in dieses einsetzbares und vorzugsweise lösbar mit dem Außenteil verbindbares Einsatzteil. Das Einsatzteil kann dabei Einstecköffnungen und Dichtungsringe verschiedener Größe zur Anpassung bzw. einfachen Anpassung an verschiedene Leitungsquerschnitte umfassen. Diese Ausgestaltung weist diverse Vorteile auf. Zum einen wird kein abgeschlossener und abzudichtender Aufnahmeraum für das auf Dichtheit zu prüfende Kabel bzw. die Leitung benötigt.

Das zuvor beschriebene Ventil, welches vorzugsweise als Schieber-Ventil bzw. 3/2-Wegeventil ausgebildet ist, verfälscht mitunter beim Umschalten das Volumen in der Messzelle. Auch das Einspannen des offenen Einsteckendes in den Adapter erzeugt mitunter einen ungewünschten Druckaufbau in der Messzelle, welche die Messwerte verfälschen kann. Zudem können Verfälschungen der Messwerte durch thermische Einflüsse wegen dem Magnetventil erfolgen.

Zur Vermeidung dieser Probleme ist das Ventil zum Absperren des Adapters bei einer bevorzugten Weiterentwicklung als Vakuumsteuerblock ausgebildet, der insbesondere drei pneumatisch gesteuerte 2/2-Wegeventile umfasst, von denen - vom Adapter gesehen - das erste und das zweite Ventil in Reihe geschaltet sind und das dritte Ventil parallel zu den ersten beiden Ventilen geschaltet ist.

Bevorzugt umfasst jedes dieser Ventile zwei Ventilkolben, die mit Ventilflächen in Schießstellung gegeneinander anliegen. Von diesen Ventilkolben steht ein erster Ventilkolben fest und ein zweiter Ventilkolben ist die durch über eine Steuerleitung aufgebrachter Steuerdruck gegen eine, sich in Ventillängsachse zwischen den Ventilkolben angeordnete Feder drückbar, welche die Ventilkolben nach außen gegen das Gehäuse des Vakuumsteuerblocks gedrückt. Ein zwischen den aufeinander zu ragenden Ventilflächen der Ventilkolben angeordneter Dichtring verschließt den zentralen Durchgang zwischen den Ventilkolben im geschlossenen Zustand, wenn diese durch Druck die jedem Ventil zugeordnete Steuerleitung aufeinander gedrückt werden. Die Ventile sind also in Ruhestellung (ohne Druck auf der Steuerleitung) offen, und geben den Durchgang frei. Durch Aufbringen von Ventildruck auf eine jedem Ventil zugeordnete Steuerleitung können die Ventile wahlweise geöffnet und geschlossen werden.

Die Ventilkolben sind so ausgebildet, dass der auf das Ventilgehäuse mittels einer Verbindungsleitung von der Druckerzeugungseinheit aufgebrachte Unterdruck seitlich in den beweglichen Ventilkolben des dritten Ventils eintritt.

Jeder bewegliche Ventilkolben weist eine sich quer zur Kolbenlängsachse, welche sich entlang der zwischen den Ventilkolben angeordneten Feder streckt, durch den Ventilkolben verlaufende Kolbendurchgangsöffnung auf.

Bevorzugt sind die Ventilkolben in diese aufnehmenden Öffnungen bzw. Bohrungen mit die Ventilkolben umschließenden Kolbenwänden angeordnet. Die Kolbenwände zwischen angrenzenden Kolben können eine Wandöffnung aufweisen, durch die der anstehende Druck von einer Kolbenkammer in die angrenzende Kolbenkammer strömen kann. Ist diese Wandöffnung auf der Höhe der Kolbendurchgangsöffnungen zwischen zwei angrenzenden Ventilen angeordnet, kann der Druck auch dann durch die angrenzenden Ventile strömen, wenn diese geschlossen sind. Ist die Wandöffnung in einer Trennwand hingegen auf der Höhe der Ventilflächen von zwei angrenzenden Ventilen ausgebildet, kann der Druck von einem Kolben an den angrenzenden Kolben nur strömen, wenn die angrenzenden Ventile auch offen sind.

Erfindungsgemäß die ist Wandöffnung in der äußeren Kolbenwand zwischen dem zweiten und dem dritten Ventil auf der Höhe der Kolbendurchgangsöffnung in den beweglichen Kolben ausgebildet und in der inneren Kolbenwand auf der Höhe der Ventilflächen zwischen dem ersten und dem zweiten Ventil.

Durch die Wandöffnung in der äußeren Kolbenwand kann der außenseitig auf den Vakuumsteuerblock aufgebrachte Druck auch bei geschlossenem dritten Ventil durch die äußere, zwischen dem dritten und zweiten Ventil ausgebildete Kolbenwand auf der Höhe der Kolbendurchgangsöffnung in das zweite, mittlere Ventil strömen.

Ist das zweite Ventil geschlossen, passiert somit nichts Weiteres. Ist dieses zweite Ventil hingegen offen, strömt der Unterdruck in Längsrichtung des zweiten Ventils und sodann über die geöffnete Ventilfläche seitlich durch die Wandöffnung in der inneren Kolbenwand zwischen dem ersten und dem zweiten Ventil und somit in den Drucksensor und den Adapter.

Ist das erste, am nächsten zum Adapter gelegene Ventil geschlossen, wird der Adapter abgeriegelt.

Zur besseren Abdichtung der in Schließstellung gegeneinander anliegenden Dichtflächen der Ventilkolben kann eine zusätzliche Dichtung vorgesehen sein, insbesondere eine Ringdichtung.

Die Strömungsrichtung bei den Ventilen ist demnach wie folgt: Der aufgebrachte Druck strömt durch die seitliche Ventildurchgangsöffnung in dem beweglichen Ventilkolben ein und sodann unter Umlenkung von 90° in Ventillängsrichtung entlang der Feder bis zur Dichtfläche zwischen den Ventilkolben. Ist diese offen, strömt der Druck durch die geöffnete Dichtfläche aus und durch die Wandöffnung in das geöffnete Ventil daneben. Ist das Ventil geschlossen, strömt der Druck nur durch die Ventildurchgangsöffnung in dem beweglichen Ventilkolben und, sofern in der Wand zwischen den angrenzenden Ventilen eine Wandöffnung vorgesehen ist, in die Ventildurchgangsöffnung des angrenzenden beweglichen Ventilkolbens.

Der erfindungsgemäße Vakuumsteuerblock ist sehr kompakt, einfach aufgebaut und weist wenig Leervolumen auf. Die Ventilkolben der Ventile müssen nur eine geringe Bewegung von einigen Millimetern zum Öffnen und Schließen ausführen und sind insofern schnell zu betätigen. Da der Vakuumsteuerblock quasi unmittelbar mit dem Adapter verbunden ist, werden keine Leitungen benötigt. Da die Ventile pneumatisch gesteuert werden, also nicht elektrisch, wird keine die Messwerte verfälschende Wärme erzeugt, was die Messgenauigkeit verbessert.

Den drei 2/2-Wegeventilen in dem Vakuumsteuerblock kommen somit die folgenden Funktionen zu:

Ventil 1 (am nächsten zum Adapter): sperrt Adapter für Kalibrierung der Druckerzeugungsvorrichtung (Hauptkolben) und Selbsttest ab;

Ventil 2 (mittleres Ventil): riegelt Vakuumerzeugung ab. Nur noch der Adapter und der Prüfkörper sind angeschlossen. Dieses ermöglicht eine besonders genaue Messung;

Ventil 3 (am weitesten vom Adapter entfernt): Entlüftung der Messzelle.

Bei der Prüfung eines Prüfkörpers arbeiten diese drei Ventile innerhalb des Vakuumsteuerblocks wie folgt:

1. Prüfkörper einstecken; alle drei Ventile sind offen;

2. Prüfkörper einklemmen;

3. schließen Entlüftungsventil 3;

4. Aufbringen von Vakuum auf die Messzelle über offene Ventile 1 und 2;

5. Betätigungskolben der Druckerzeugungseinheit wird so geregelt, dass der Prüfdruck konstant ist, z.B. konstant 600 mbar aufweist;

6. Ermitteln des Bezugsvolumens in der Messzelle.

7. Mittleres Ventil 2 schließt und regelt die Druckerzeugung ab. Somit ist der Drucksensor nur mit dem Adapter und dem darin aufgenommenen Prüfkörper verbunden. Es wird gewartet, ob der Druck fällt und damit die Berechnung der Leckage.

9. Entlüftung über Ventil drei: Adapter eröffnet und Kolben fährt in Grundstellung.

Obgleich die Erfindung bevorzugt für das Überprüfen von Kabeldichtungen, an Kabelenden, also Endkabeln eingesetzt wird, ist für den Fachmann verständlich, dass diese genauso gut eingesetzt werden kann für das Überprüfen einer Verbindungs- bzw. Abdichtung eines Prüfkörpers beliebiger Art auf Dichtheit, z.B. eines Rohrs ohne Kabel mit einem an einem Ende verbundenen Element, z.B. einem Behälter, einem Gehäuse oder dergleichen.

In der folgenden ausführlichen Beschreibung wird auf die beigefügten Zeichnungen Bezug genommen, die Teil dieser Erfindungsbeschreibung bilden und in denen zur Veranschaulichung spezifische Ausführungsformen gezeigt sind, mit denen die Erfindung ausgeübt werden kann. In dieser Hinsicht wird Richtungsterminologie wie etwa "oben", "unten", "vorne", "hinten", "vorderes", "hinteres", usw. in Bezug auf die Orientierungen der beschriebenen Figur(en) verwendet. Da Komponenten von Ausführungsformen in einer Anzahl verschiedener Orientierung positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Die folgende ausführliche Beschreibung ist nicht im einschränkenden Sinne aufzufassen.

Im Rahmen dieser Beschreibung werden die Begriffe "verbunden", "angeschlossen" sowie "integriert" verwendet zum Beschreiben sowohl einer direkten als auch einer indirekten Verbindung, eines direkten oder indirekten Anschlusses sowie einer direkten oder indirekten Integration. In den Figuren werden identische oder ähnliche Elemente mit identischem Bezugszeichen versehen, soweit dieses zweckmäßig ist.

Bezugszeichenlinien sind Linien, die das Bezugszeichen mit dem betreffenden Teil verbinden. Ein Pfeil hingegen, der kein Teil berührt, bezieht sich auf eine gesamte Einheit, auf die er gerichtet ist. Die Figuren sind im Übrigen nicht unbedingt maßstäblich. Zur Veranschaulichung von Details können möglichweise bestimmte Bereiche übertrieben groß dargestellt sein. Darüber hinaus können die Zeichnungen plakativ vereinfacht sein und enthalten nicht jedes bei der praktischen Ausführung gegebenenfalls vorhandene Detail. Die Begriffe "oben" und "unten" beziehen sich auf die Darstellung in den Figuren.

Es zeigen:

Figur 1        eine isometrische Frontansicht der Vakuumdicht- heitsprüfeinrichtung umfassend insgesamt acht Adapter;

Figur 2        eine isometrische Rückansicht der Vakuumdichtheitsprüfeinrichtung gemäß Figur 1 mit teilmontiertem Außengehäuse;

Figur 3        eine isometrische Ansicht einer Messzelle umfassend einen Adapter, ein Drucksensor und ein Ventil;

Figur 4        einen Schnitt der Messzelle gemäß Figur 3;

Figur 5        einen Querschnitt durch die Dichtheitsprüfeinheit gemäß Figur 1;

Figur 6        einen vergrößerten Längsschnitt eines Adapters; und

Figur 7        eine graphische Darstellung eines typischen Prüfverfahrens;

Figur 8:       eine graphische Darstellung der bei dem Prüfverfahren erfassten Drücke und Volumina in einem defekten (ermittelbare Leckage) und einem fehlerfreien (keine Leckage ermittelbar) Prüfkörper über die Zeit, welche einen Präzisierten Teilprozess von Figur 7 von Beginn bis zum Ende der Zeit T2 darstellt;

Figur 9        einen Querschnitt einer alternativ ausgebildeten Messzelle mit einem Adapter mit einer Feder und einem Vakuumsteuerblock anstelle eines 3/2-Wegeventils;

Figur 10:      ein Pneumatikplan einer Messzelle; und

Figur 11:      eine isometrische Seitenansicht einer alternativen Prüfeinheit bei abgenommener Seitenwand.

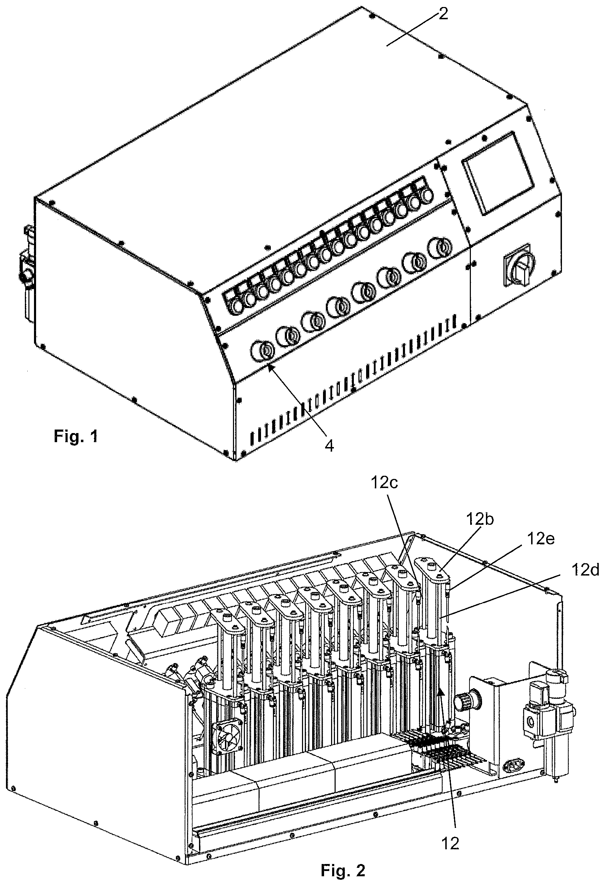

Figur 1 zeigt eine isometrische Frontansicht einer erfindungsgemäßen Dichtheitsprüfeinrichtung vorliegend umfassend acht Messzellen.

Demnach weist die Dichtheitsprüfeinrichtung ein umfänglich umschließendes, kastenartiges Gehäuse 2 auf, welches einen Innenraum definiert, in dem mehrere Messzellen und die sonstige Apparatur angeordnet sind.

Jede Messzelle umfasst einen im Wesentlichen hohlzylindrischen Adapter 4, der jeweils in Einbaulage mit seiner nach vorne offenen Einstecköffnung 4a aus einer entsprechenden Öffnung in dem Gehäuse 2 ragt, so dass ein Prüfkörper bzw. Prüfling mit einem offenen Prüfende in diese Einstecköffnung 4a einsteckbar ist. Über ein rückseitiges Ende des Adapters 4 angeordnetes Leitungsstück 6 ist jeder Adapter 4 mit einem Ventil 8 verbunden. Ferner ist mit dem Leitungsstück 6 ein Drucksensor 10 verbunden, der den Leitungsdruck sowie den Systemdruck in der Leitung und dem Prüfkörper erfasst. Schließlich ist das Ventil über eine Leitung mit einer Kolbenvakuumpumpe 12 verbunden. Jeder Adapter 4 umfasst eine Versorgungsleitung zur Versorgung mit Druckluft, womit der Adapter betätigt wird.

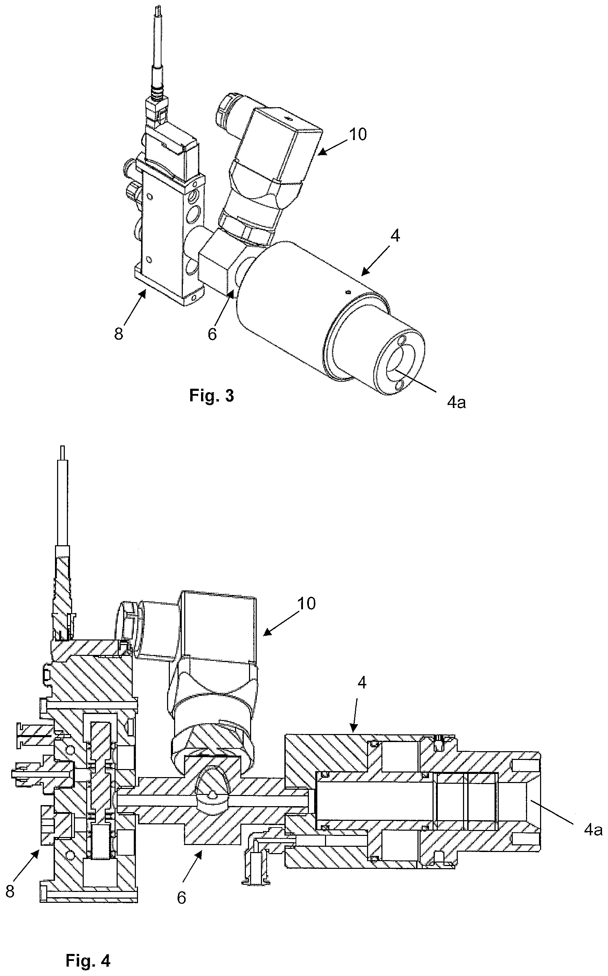

Die Figuren 3 und 4 zeigen vergrößert die isometrische Ansicht des Adapters 4 mit seiner frontseitigen Einstecköffnung 4a, dem rückseitig sich entlang der Längserstreckungsrichtung des Adapters 4 erstreckenden Leitungsstück 6, der von dem Leitungsstück schräg abzweigende Drucksensor 10 sowie das am rückseitigen Ende des Leitungsstücks 6 vorgesehene Ventil 8.

Figur 2 zeigt nebeneinander in dem Gehäuse 2 sitzende Kolbenvakuumpumpe 12, die jeweils mit einer Messzelle zusammenwirken. Jede Kolbenvakuumpumpe 12 umfasst einen mittigen Kolbenzylinder, in welchem ein Hauptkolben 12a relativ beweglich verschiebbar ist, und zwar mittels zwei seitlich neben dem Hauptkolben 12a angeordneten Betätigungskolben 12c, 12d, die mit ihren Arbeitsenden eine Betätigungsplatte 12b antreiben, die mit der Schubstange des Hauptkolbens 12a verbunden ist. Daneben umfasst jede Kolbenvakuumpumpe 12 einen Wegmessschreiber 12e, mit denen der Verstellweg des Hauptkolbens genauestens erfassbar ist.

Durch das Anziehen der jeweiligen Kolbenvakuumpumpe 12, also das Anheben des Hauptkolbens 12a im Verhältnis zu dem stationären Außenzylinder, wobei der Hauptkolben 12a einen genau messbaren Weg zurücklegt, der somit zur genauen Berechnung des evakuierten oder nachströmenden Volumens herangezogen werden kann. Der Wegmessschreiber 12e liefert somit zunächst eine genaue Aussage über das aus dem System evakuierte Volumen bis der vorgegebene Prüfdruck von vorzugsweise 600 mbar erreicht ist und sodann über das aus dem Prüfkörper evakuierte Volumen zur Bestimmung von dessen Volumen.

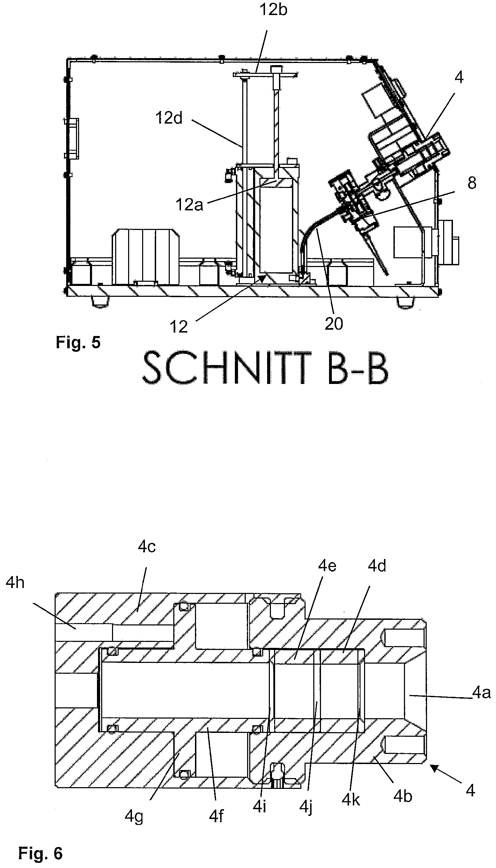

Die Figur 6 zeigt einen vergrößerten Längsschnitt eines erfindungsgemäßen Adapters 4. Dieser umfasst ein im Wesentlichen hohlzylindrisches Adaptergehäuse, das etwa in der Mitte unter Bildung eines Absatzes übergeht von einem vorderen, hohlzylindrischen Dichtungsgehäuse 4b mit einem ersten Außendurchmesser in ein hinteres, ebenfalls hohlzylindrisches Außengehäuse 4c mit einem gegenüber dem Dichtungsgehäuse 4b verbreiterten zweiten Außendurchmesser.

Das vordere Dichtungsgehäuse 4b umfasst eine vorderseitige Einstecköffnung 4a, welche sich entlang der Adapterlängsachse entlang des insgesamt rotationssymmetrischen Adaptergehäuses erstreckt und zur einsteckenden Aufnahme des Prüfendes des Prüfkörpers ausgebildet ist. Etwas nach innen versetzt von dieser Einstecköffnung 4a geht diese unter Bildung eines Innenabsatzes über in einen leicht verbreiterten Aufnahmeraum, in welchem zwei in Längsrichtung hintereinander geschaltete Dichtungsringe 4d, 4e mit entsprechendem Außendurchmesser aus Kautschuk angeordnet sind. Außenseitig von und zwischen den Dichtungsringen 4d, 4e sind zudem Druckscheiben angeordnet.

In dem hinteren Außengehäuse 4c des Adaptergehäuses, das einen etwa doppelt so großen Innendurchmesser wie der Innendurchmesser des Aufnahmeraums des Dichtungsgehäuses 4b aufweist, ist ein Kolben relativ beweglich gelagert. Dieser Kolben umfasst einen sich kollinear zur Adapterlängsachse und diese mit seiner Mantelfläche umschließenden, hohlzylindrischen Innenkörper 4f, von dessen äußerer Mantelfläche sich eine Scheibe 4g radial nach außen erstreckt. Das Vorderende des hohlzylindrischen Innenkörpers 4f wirkt unter Zwischenschaltung einer Distanzplatte auf die Dichtungsringe 4d, 4e. Über eine Versorgungsleitung 4h in dem Außengehäuseteil 4c ist die Druckplatte 4g mit einem Fluid, vorzugsweise Druckluft, beaufschlagbar und wird somit axial in dem stationären Adaptergehäuse verschoben zur Komprimierung der stationären Dichtungsringe 4d, 4e. Bei dieser Komprimierung können sich die Dichtungsringe 4d, 4e nur radial nach innen ausdehnen und dichten somit einen in die Einstecköffnung 4a aufgenommenen Prüfkörper vollumfänglich und dicht gegen die Umgebung ab.

Die Dichtungsringe 4d, 4e sind axial außenseitig eingefasst von Druckscheiben 4i, 4k, also kreisringförmigen Scheiben, welche die Flächenpressung auf die Dichtungsringe 4d, 4e reduziert und somit eine gleichmäßigere Kraftentfaltung des Innenkörpers 4f bei Relativbewegung im Verhältnis zu dem stationären Adaptergehäuse bewirken. Vorzugsweise ist auch zwischen den beiden aneinander angrenzenden Dichtungsringen 4e, 4d Druckscheibe 4j angeordnet. Bevorzugt umfassen die Druckscheiben Metallscheiben.

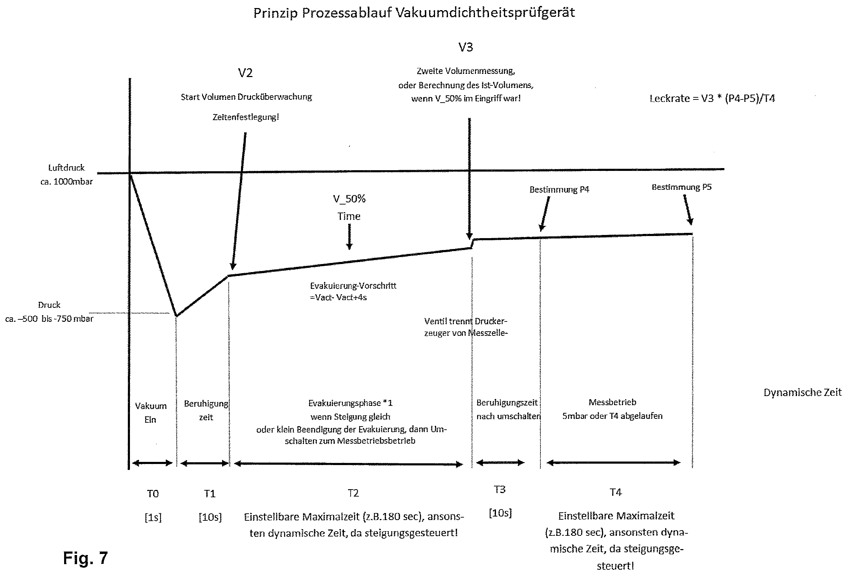

In der Figur 7 dargestellten Grafik des Drucks über die Zeit ist ein typischer Ablauf eines erfindungsgemäßen Prüfverfahrens an einem Kabel für die Kfz-Industrie mittels der erfindungsgemäßen Dichtheitsprüfeinrichtung beschrieben, welches in diesem Beispiel bei einem typischen Umgebungsdruck von ca. 1000 mbar arbeitet. Nach dem Einbringen des Prüflings in die Einstecköffnung 4a des Adapters 4 wird der Prüfling zunächst gegenüber der Umgebung abgedichtet, indem die Druckplatte 4g über die Versorgungsleitung 4h mit Druck beaufschlagt wird, sich der Innenkörper 4f axial in dem Adaptergehäuse nach vorne verschiebt und so die Dichtungsringe 4d, 4e komprimiert, die ihrerseits umfänglich den Prüfkörper gegenüber der Umgebung abdichten.

Die Prinzipskizze in Figur 7 erläutert prinzipiell Prüfverfahren, das nicht Teil der vorliegenden Ansprüche ist, anhand einer Darstellung des Drucks über die Zeit.

1. Aufbringen Prüfdruck (T0): Zunächst zieht die KolbenVakuumpumpe 12 an und erzeugt somit im Zeitraum T0, welcher vorliegend 1 Sekunde beträgt, in dem System den Prüfdruck von vorzugsweise -600 mbar.

2. Erste Beruhigungszeit (T1): In der ersten Beruhigungszeit T1, welche vorliegend etwa 10 bis 180 Sekunden beträgt, fäll der Druck ab und nähert sich dem Arbeitsdruck von vorzugsweise -600 an und das System beruhigt sich.

3. Volumenmessung des Prüfkörpers (T2): Zu Beginn des Zeitintervalls erfolgt eine erste Volumenbestimmung V2 und am Ende des Zeitintervalls T2 eine zweite Volumenbestimmung V3. Aus der Differenz zwischen V2 und V3 ist eine grobe Vorabschätzung der Leckrate möglich, welche zur Korrektur der Volumenbestimmung verwendbar ist.

4. Ventilabschaltung: Sodann schaltet am Ende der Zeit T2 das Ventil den Druckerzeuger ab, trennt also den Pneumatikzylinder 12 von der Messeinheit.

5. Zweite Beruhigungszeit (T3): Sodann schließt sich mit der Zeit T3, die vorliegend etwa 10 Sekunden beträgt, eine zweite Beruhigungszeit nach dem Umschalten an, um dem System vor dem eigentlichen Messbetrieb nochmals die Möglichkeit zur Beruhigung und zum Ausgleich zu geben. Die Länge dieser zweiten Beruhigungszeit T3 ist allgemein abhängig von den Materialeigenschaften des Prüfkörpers und die Dichtheitsprüfeinrichtung bzw. enthaltene Software gibt vorzugsweise einen zulässigen Druckanstieg vor.

6. Messen Leckrate (T4): Da das Volumen des Prüfkörpers bestimmt ist, wird nunmehr nur noch über den Drucksensor der Messzelle der Druckunterschied von Beginn bis Ende der Zeit t4 gemessen. Auch beim Bestimmen der Leckrate erfolgt ein permanenter Vergleich von zwei hintereinander gemessenen Druckwerten (P4 und P5). Ist dabei die Druckdifferenz größer als ein bestimmter Wert, z.B. 5 mbar, kann die die Messung vor Ablauf von T4 beendet werden, die etwa 180 Sekunden beträgt. Aus dem in Schritt 3. ermittelten Volumen V3 und den Drücken P4 und P5 wird sodann in Verbindung mit der Zeit T4 die Steigung der Geraden im Zeitraum T4 ermittelt und damit die Leckrate bestimmt.

Die Messung kann also beendet werden, wenn innerhalb der Zeit T4 eine Druckdifferenz größer 5 mbar gemessen wird oder eben die Zeit T4 abläuft.

Die Länge der Zeiträume T0 bis T4 ist angepasst an die Materialeigenschaften und den Leitungsquerschnitt des Prüfkörpers. Je dünner und länger der Prüfkörper ist, desto länger sind die jeweiligen Zeiträume.

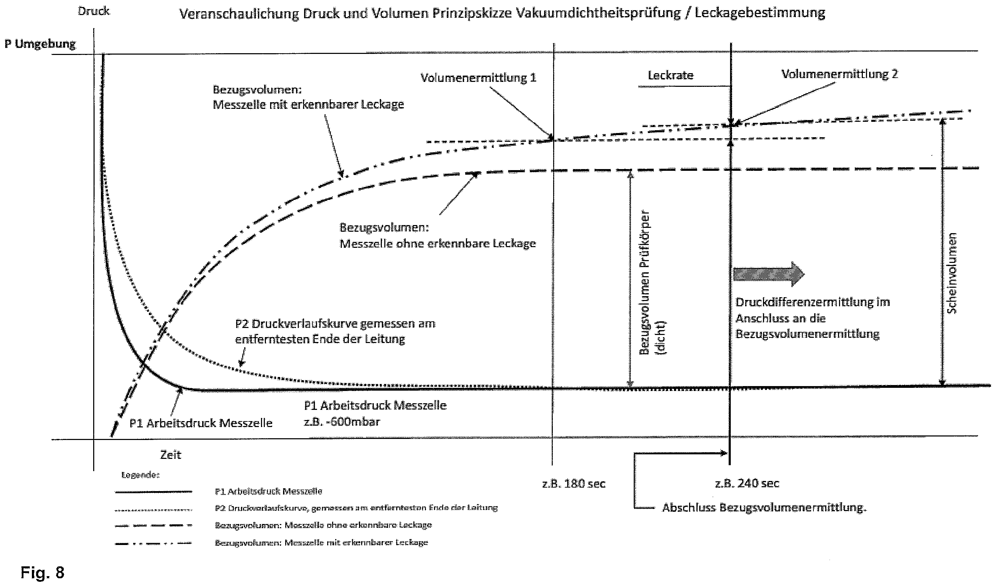

Figur 8 zeigt den Verlauf der Drücke innerhalb der Messzelle P1 und den Evakuierungsfortschritt im Prüfkörper P2 über die Zeit. Zudem dargestellt ist der Verlauf des momentan errechneten Bezugsvolumens innerhalb eines Prüfkörpers mit und ohne erkennbare Leckage.

Es zeigt sich, dass der Druck P1 innerhalb der Messzelle und der Druck P2 innerhalb des Prüfkörpers, also der Leitungsmessung sich dem Druck P1 innerhalb der Prüfungskammer annähert und ab ca. 180 Sekunden nahezu gleich ist.

Das berechnete Leitungsprüfvolumen der Messzelle ohne erkennbare Leckage zunächst kontinuierlich, aber mit abnehmender Steigung an und ist dann bei dem gewählten Prüfkörper ab ca. 180 Sekunden konstant, erstreckt sich also in einer Geraden. Das berechnete Leitungsprüfvolumen der Messzelle mit einer erkennbaren Leckage steigt zunächst ähnlich an wie die Messzelle mit einer nicht erkennbaren Leckage, aber stärker als diese an. Entscheidend ist, dass nach der ersten Volumenermittlung, im gewählten Fall bei 180 Sekunden, das errechnete Leitungsprüfvolumen mit deutlicher Steigung scheinbar weiter ansteigt. Es handelt sich somit um ein "Scheinvolumen", weil aufgrund eines Leckes ein Volumen berechnet wird, was nicht der Realität entspricht.

Aus diesen Beobachtungen wurde die Erkenntnis gewonnen, dass die eigentliche Messung erst nach einer bestimmten Zeit beginnen muss, welche abhängig von den Leitungseigenschaften des Prüfkörpers ist. Sodann wird nach dieser Abwartzeit zweimal Druckmessung und Volumenermittlung vorgenommen. Steigt das Volumen von der ersten Volumenermittlung zur zweiten Volumenermittlung an, ist dieses ein Indiz für eine Leckage innerhalb des Prüfkörpers. Bei dem betreffenden Prüfkörper erfolgt die erste Volumen- und Druckermittlung nach 180 Sekunden und die zweite Volumen- und Druckermittlung nach etwa 240 Sekunden.

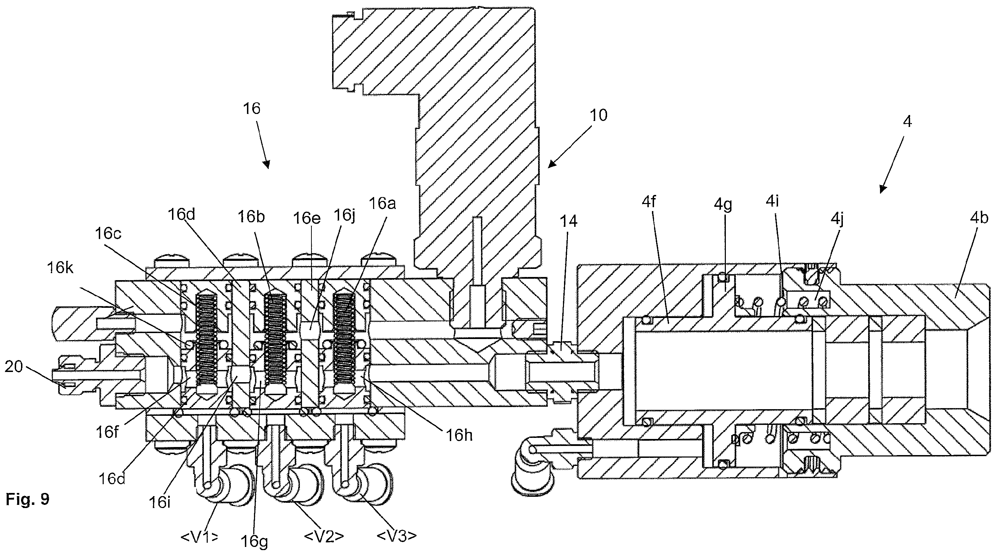

Figur 9 zeigt einen vergrößerten Querschnitt einer alternativ ausgebildeten Messzelle, ebenfalls ohne Verbindungsleitung zu der Druckerzeugungsvorrichtung. Dies unterscheidet sich von der in der Figur 4 dargestellten Ausführungsform zum Einen durch das zwischen dem vorderen Dichtungsgehäuse 4b und dem Innenkörper 4f bzw. der Scheibe 4g wirkende Druckfeder 4i, welche mit dem hinteren Ende angrenzend an die Scheibe 4g auf einer Federhülse sitzt und mit dem Vorderende in einer Federnut 4j bzw. einem Federsitz auf einem Federsitzt am hinteren Ende des Dichtungsgehäuses 4b einsitzt.

Ansonsten ist der Adapter 4 aufgebaut wie die in Figur 6 dargestellte, erste Ausführungsform.

Zur Reduzierung der Messungenauigkeiten ist das Leitungsstück 14 zwischen dem hinteren Ende des Adapters 4 und dem Ventil 16 deutlich verkürzt und der Drucksensor 10 ist in das Gehäuse des Ventils 16 links integriert.

Das Ventil ist in dieser Ausgestaltung als Vakuumsteuerblock 16 ausgebildet, der insgesamt drei 2/2-Wegeventile umfasst, die hintereinander in dem Gehäuse angeordnet sind und von denen jedes einzelnen über einen Druckluftzylinder ansteuerbar ist. Das erste Ventil 16a ist das dem Adapter 4 am nächsten gelegene Ventil, das zweite Ventil 16b ist das mittlere Ventil und das dritte Ventil 16c ist das am weitesten von dem Adapter 4 Weg gelegene Ventil.

Jedes Ventil 16a, 16b, 16c umfasst zwei Ventilkolben, die sich quer zur Längsrichtung des Vakuumsteuerblocks 16 erstrecken und zwischen denen jeweils eine Feder angeordnet ist, welche die Ventilkolben nach außen gegen das Gehäuse des Vakuumsteuerblocks 16 drücken. Von den Ventilkolben ist je ein Ventilkolben feststehend und ein beweglicher Ventilkolben, der näher ein einer korrespondierenden Steuerleitung gelegen ist, durch auf die Steuerleitung 16a, 16b, 16c aufgebrachten Druck gegen die Federkraft beweglich. So können die Ventile 16a, 16b, 16c durch Aufbringen von Druck durch die eine jedem Ventil 16a, 16b, 16c zugeordnete Steuerleitung <V1>, <V2>, <V3> wahlweise geöffnet und geschlossen werden.

Jeder bewegliche Ventilkolben weist eine sich quer zur Kolbenlängsachse durch den Ventilkolben verlaufende Kolbendurchgangsöffnung 16f, 16g, 16h auf.

Zwischen den angrenzenden Kolben ist jeweils eine trennende Kolbenwand 16d, 16e ausgebildet, welche die Kolben dichtend voneinander abtrennt und umschließt, nämlich eine äußere Kolbenwand 16d zwischen dem dritten Ventil 16c und dem zweiten Ventil 16b und eine innere Kolbenwand 16d zwischen dem und eine zweiten Zylinder 16b und dem ersten Zylinder 16a.

Jede Kolbenwand weist eine Wandöffnung 16i, 16j auf, durch welche der Druck hindurchtreten kann.

Erfindungsgemäß ist die Wandöffnung 16i in der äußeren Kolbenwand 16d zwischen dem dritten 16c und zweiten Ventil 16b auf der Höhe der Kolbendurchgangsöffnung 16f, 16g in den beweglichen Kolben ausgebildet.

In der inneren Kolbenwand 16e ist diese Wandöffnung 16j hingegen auf der Höhe der Ventilflächen zwischen dem ersten 16a und dem zweiten Ventil 16b ausgebildet.

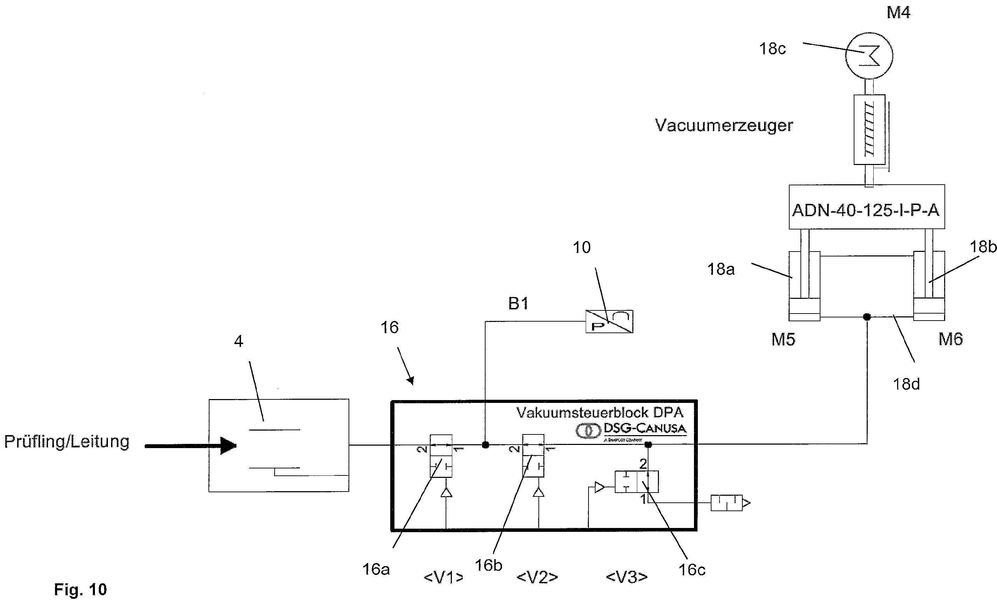

Figur 10 zeigt einen vereinfachten Pneumatikplan des Adapters, des Vakuumsteuerblocks sowie des Vakuumerzeugers (Druckerzeugungseinheit). Der Vakuumsteuerblock 16 umfasst die drei nebeneinander angeordnete 2/2-Wegeventil 16a, 16b, 16c, von denen die Ventile 16a und 16b in Reihe geschaltet sind und von denen das dritte Ventil 16c parallel zu den ersten beiden Ventilen 16a, 16b geschaltet ist.

Das erste Ventil 16a, angesteuert über den Steuerleitung V1, öffnet und schließt den Adapter.

Zwischen dem ersten Ventil 16a und dem zweiten Ventil 16b ist der Drucksensor 10 angeordnet.

Das zweite Ventil 16b, welches über die Steuerleitung V2 gesteuert wird, riegelt die von der Druckerzeugungseinheit Druckluft bzw. den Unterdruck ab.

Und das dritte Ventil 16c, welches über die Steuerleitung V3 gesteuert wird ist, ermöglicht in geöffneter Stellung eine Entlüftung.

Zur Verbesserung der Abdichtung der in Schließstellung gegeneinander anliegenden Dichtflächen der Ventilkolben kann ist jeweils ein Dichtring eine zusätzliche Dichtung vorgesehen sind, insbesondere eine Ringdichtung.

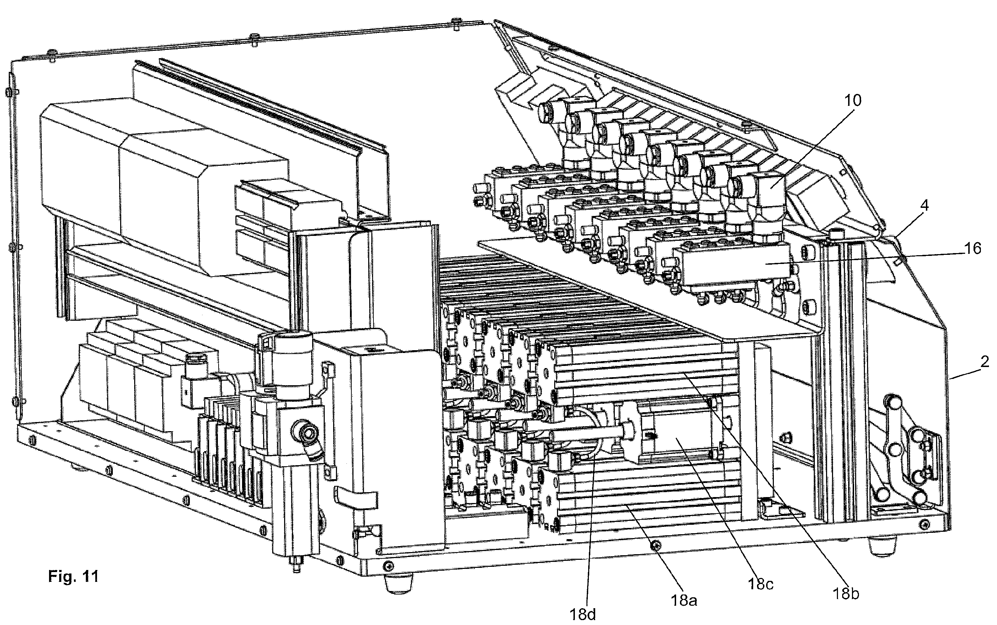

Die ebenfalls als Kolbenvakuumpumpe ausgebildete Druckerzeugungseinheit ist bei der in den Figuren 10 und 11 dargestellten Ausführungsformen mit zwei gleich großen Teilkolben 18a, 18b ausgebildet, die parallel erstreckend nebeneinander angeordnet sind und deren Arbeitskolben über einen zwischen den Teilkolben 18a, 18b angeordneten Schrittmotor 18c verstellbar ist. Die Teilkolben 18a, 18b sind über eine Verbindungsleitung 18d zur Erzeugung eines Gesamtvolumens miteinander verbunden. Diese Ausgestaltung hat den Vorteil, dass die Bauhöhe um die Hälfte reduziert wird und die Druckerzeugungseinheit bzw. der Vakuumerzeuger liegend in das Gehäuse 4 integriert werden kann, was die Bauhöhe reduziert. Ferner ist der Stellmotor in beide Richtungen genauer einstellbar.

Figur 11 zeigt mehrere dieser Kolbenvakuumpumpen mit zwei Teilkolben 18a, 18b liegend eingebaut in das Gehäuse 2. Die Vakuumsteuerblöcke 16 jeder Messzelle 16 sind oberhalb von den jeweiligen Teilkolben 18a, 18b mit je einem Vakuumsteuerblock 16 und einem Drucksensor 10 angeordnet. Die Adapter 4 mit den Stecköffnungen sind wiederum vorderseitig an der Vorderseite des Gehäuses angeordnet. Von diesen Messzellen sind insgesamt 8 in dem Gehäuse 2 angeordnet, die unabhängig voneinander betrieben werden können. Der Gegenstand der vorliegenden Erfindung ergibt sich nicht nur aus dem Gegenstand der einzelnen Patentansprüche, sondern aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

**Bezugszeichenliste**

|       |                    |
|-------|--------------------|
| 2     | Gehäuse            |
| 4     | Adapter            |
| 4a    | Einstecköffnung    |
| 4b    | Dichtungsgehäuse   |
| 4c    | Außengehäuseteil   |
| 4d, 4e | Dichtungsring     |
| 4f    | Innenkörper        |
| 4g    | Scheibe            |
| 4h    | Versorgungsleitung |
| 4i    | Druckfeder         |
| 4j    | Federnut           |
| 4i, 4j, 4k | Druckscheibe  |

| 6 | Leitungsstück |
|---|---|
| 8 | Ventil |
| 10 | Drucksensor |
| 12 | Kolbenvakuumpumpe |
| 12a | Hauptkolben |
| 12b | Betätigungsplatte |
| 12c,d | Betätigungskolben |
| 12e | Wegmessschreiber |
| 14 | Leitungsstück |
| 16 | Vakuumsteuerblock |
| 16a | erste Ventil |
| 16b | zweite Ventil |
| 16c | Dritte Ventil |
| 16d | äußere Kolbenwand |
| 16e | innere Kolbenwand |
| 16f,g,h | Kolbendurchgangsöffnung |
| 16i, j | Wandöffnung |
| 16k | Dichtring |
| <V1> | Steuerleitung für ersten Ventil |
| <V2> | Steuerleitung für zweites Ventil |
| <V3> | Steuerleitung für drittes Ventil |
| 18 | Kolbenvakuumpumpe |
| 18a, 18b | Teilkolben |
| 18c | Schrittmotor |
| 18d | Verbindungsleitung |
| 20 | Verbindungsleitung |

**Patentansprüche**

**1.** Prüfverfahren zum Prüfen eines Prüfkörpers umfassend ein Kabel, das an einem vorderen Ende offen ausgebildet ist, so dass eine Innenseite des Kabels zugänglich ist, und das an einem hinteren Ende des Kabels eine abgedichtete Kabelverbindung zur Verbindung mit einem Element vorgesehen ist und wobei mittels einer Druckerzeugungseinheit ein Prüfdruck in dem Prüfkörper zur Durchführung einer Druckdifferenzmessung mittels eines Drucksensors (10) erzeugt wird, **DADURCH GEKENNZEICHNET, DASS** das vordere ggf. abisoliertes Ende des Kabels in einen Adapter (4) eingeführt wird, dass der Prüfdruck von der Druckerzeugungseinheit aufgebracht wird und ein Bezugsvolumen ($V_2$) im inneren einer Messzelle, welche den Raum innerhalb des Prüfkörpers und des Adapters mit dem angeschlossenen Drucksensor bis zu einem Ventil umfasst, automatisch ermittelt wird, DASS die Messzelle mittels des Ventils (8, 16) von der Druckerzeugungseinheit abgekoppelt wird und dass eine Leckrate des Prüfkörpers in der Messzelle mit Hilfe eines Druckdifferenzverfahrens bestimmt wird.

**2.** Prüfverfahren nach Anspruch 1, wobei das Bezugsvolumen ($V_2$) das Volumen innerhalb des Adapters (4) und das Volumen innerhalb des Prüfkörpers umfasst.

**3.** Prüfverfahren nach Anspruch 1 oder 2, wobei die Messzelle die Volumina innerhalb des Prüfkörpers, des geschlossenen, den Prüfkörper aufnehmenden Adapters (4), des Drucksensors (10) und diese Bauteile ggf. verbindende Leitungen bis zu dem Ventil (8, 16) umfasst.

**4.** Dichtheitsprüfeinrichtung zur automatischen Durchführung des Prüfverfahrens gemäß eines oder mehrerer der vorhergehenden Verfahrensansprüche, mit einer Druckerzeugungseinheit ausgebildet zur Erzeugung eines Unter- oder Überdrucks sowie einer Messzelle ausgebildet zur Aufnahme eines auf Dichtigkeit zu prüfenden Prüfkörpers umfassend ein Kabel mit einem offenen, vorderen Ende und einem mit einem hinteren Ende des Prüfkörpers mittels einer abgedichteten Verbindung verbundenes Element, **DADURCH GEKENNZEICHNET, DASS** die Messzelle mindestens einen einseitig offenen Adapter (4) mit einer Einsecköffnung (4a) ausgebildet zur einsteckenden Aufnahme des vorderen Endes des Prüfkörpers umfasst, dass die Druckerzeugungseinheit ausgebildet ist, um zunächst innerhalb der Messzelle enthaltene Luft zu evakuieren und sodann über eine bestimmte Prüfzeit einen Prüfdruck auf den Prüfkörper aufzubringen, dass der Adapter (4) ein sich entlang einer Adapterlängsachse erstreckendes Adaptergehäuse aufweist und mindestens zwei, hintereinander in dem Adaptergehäuse angeordneten Dichtungsringe (4d, 4e) umfasst, dass relativbeweglich zu dem Adaptergehäuse ein auf die Dichtungsringe (4d, 4e) wirkender Kolben angeordnet ist, dass durch eine Betätigung des Kolbens die Dichtungsringe (4d, 4e) komprimierbar sind und dass zwischen dem Adaptergehäuse und dem Kolben eine Rückstellfeder (4i) angeordnet ist.

5. Dichtheitsprüfeinrichtung nach Anspruch 4, wobei die Dichtungsringe (4d, 4e) von Druckschreiben (4i, 4i, 4k) eingefasst sind.

6. Dichtheitsprüfeinrichtung nach Anspruch 4 oder 5, wobei der Kolben einen Innenkörper (4f) und eine gegenüber dem Innenkörper (4f) verbreitete Scheibe (4g) umfasst.

7. Dichtigkeitsprüfeinrichtung nacheinem der Ansprüche 4 bis 6, wobei die Druckerzeugungsvorrichtung eine Kolbenvakuumpumpe mit mehreren, insbesondere zwei untereinander verbunden Teilkolben (18a, 18b) umfasst.

8. Dichtigkeitsprüfeinrichtung nach Anspruch 7, wobei der Schrittmotor (18c) zwischen den miteinander verbunden Teilkolben (18a, 18b) angeordnet ist.

9. Ventil zur Durchführung eines Prüfverfahrens nach einem der Verfahrensansprüche 1 bis 8 mit einer Dichtigkeitsprüfeinrichtung nach einem der Vorrichtungsansprüche 4 bis 12, wobei das Ventil als Vakuumsteuerblock (16) ausgebildet ist, welches drei über entsprechende Steuerleitungen <V1>, <V2>, <V3> gesteuerte 2/2-WegeVentile (16a, 16b, 16c) umfasst, von denen ein erstes Ventil (16a) am nächsten zum Adapter (4) gelegen ist, ein zweites Ventil (16b) über das erste Ventil (16a) von dem Adapter (4) beabstandet ist und ein drittes Ventil (16c) über das erste (16a) und das zweite Ventil (16b) von dem Adapter (4) beabstandet ist.

10. Ventil nach Anspruch 9, wobei das erste Ventil (16a) und das zweite Ventil (16b) in Reihe geschaltet sind und das dritte Ventil (16c) parallel zu den ersten beiden Ventilen (16a, 16b) geschaltet ist.

11. Ventil nach Anspruch 9 oder 10, wobei jedes Ventil (16a, 16b, 16) zwei Ventilkolben umfasst, die mit Ventilflächen in Schließstellung des Ventils dichtend gegeneinander anliegen, dass die Ventilkolben durch eine über eine Steuerleitung aufgebrauchten Steuerdruck gegen ein, sich in einer Ventillängsachse zwischen den Ventilkolben angeordnete Feder drückbar sind, welche die Ventilkolben gegeneinander nach außen gegen ein Gehäuse des Vakuumsteuerblocks (16) in eine Öffnungsstellung drücken.

12. Ventil nach Anspruch 11, wobei ein erster, feststehender Ventilkolben feststehend und ein zweiter, beweglicher Ventilkolben beweglich in dem Gehäuse angeordnet ist.

13. Ventil nach Anspruch 12, wobei der bewegliche Ventilkolben näher an der entsprechenden Steuerleitung <V1>, <V2>, <V3> gelegen ist.

14. Ventil nach Anspruch 13, wobei der bewegliche Ventilkolben eine quer zu einer Kolbenlängsachse quer durch den Ventilkolben verlaufende Kolbendurchgangsöffnung (16f, 16g, 16h) aufweist.

15. Ventil nach einem der Ansprüche 9 bis 14, wobei die Ventilkolben in Öffnungen oder Bohrungen mit diese umschließenden Kolbenwänden (16d, 16e) in dem Gehäuse des Vakuumsteuerblocks (16) angeordnet sind, und dass die Kolbenwände (16d, 16e) Wandöffnungen (16i, 16j) zum Durchgang eines auf das Ventil aufgebrachten Drucks aufweisen, die entweder auf der Höhe der Kolbendurchgangsöffnungen (16f, 16g, 16h) der beweglichen Ventilkolben oder auf der Höhe der Ventilflächen zwischen zwei angrenzenden Ventilen (16a, 16b, 16c) angeordnet sind.

## Claims

1. Test procedure for testing a test specimen comprising a cable which is formed open at a front end so that an inside of the cable is accessible, and which is provided at a rear end of the cable with a sealed cable connection for connection to an element, and wherein a test pressure is generated in the test specimen by means of a pressure generating unit for carrying out a pressure difference measurement by means of a pressure sensor (10), **CHARACTERIZED IN THAT** the front, possibly stripped, end of the cable is introduced into an adapter (4), that the test pressure is applied by the pressure generating unit and a reference volume ($V_2$) is automatically determined in the interior of a measuring cell which comprises the space within the test specimen and the adapter with the connected pressure sensor up to a valve, THAT the measuring cell is uncoupled from the pressure generating unit by means of the valve (8, 16) and that a leakage rate of the test body in the measuring cell is determined with the aid of a pressure difference method.

2. Test procedure according to claim 1, wherein the reference volume ($V_2$) comprises the volume within the adapter (4) and the volume within the test body.

3. Test procedure according to claim 1 or 2, wherein the measuring cell comprises the volumes within the test body, the closed adapter (4) receiving the test body, the pressure sensor (10) and lines connecting these components up to the valve (8, 16), if necessary.

4. Leak testing device for automatically carrying out the test method according to one or more of the preceding method claims, with a pressure generating unit designed to generate a negative or positive pressure and a measuring cell designed to receive a test body to be tested for leaks, comprising a cable with an open front end and an element connected to a rear end of the test body by means of a sealed connection, **CHARACTERIZED IN THAT** the measuring cell comprises at least one adapter (4) which is open on one side and has an insertion opening (4a) designed to receive the front end of the test body in an insertion manner, that the pressure generating unit is designed to first evacuate air contained within the measuring cell and then to apply a test pressure to the test body over a certain test time, that the adapter (4) comprises an adapter housing extending along a longitudinal axis of the adapter and at least two sealing rings (4d, 4e) located on behind the other in the adapter housing, **in that** a piston acting on the sealing rings (4d, 4e) is arranged so as to move relative to the adapter housing, **in that** the sealing rings (4d, 4e) can be compressed by actuating the piston, and **in that** a return spring (4i) is arranged between the adapter housing and the piston.

5. Leak testing device according to claim 4, wherein the sealing rings (4d, 4e) are surrounded by pressure letters (4i, 4i, 4k).

6. Leak testing device according to claim 4 or 5, wherein the piston comprises an inner body (4f) and a disk (4g) widened relative to the inner body (4f).

7. Leak testing device according to any one of claims 4 to 6, wherein the pressure generating device comprises a piston vacuum pump with several, in particular two interconnected partial pistons (18a, 18b).

8. Leak testing device according to claim 7, wherein the stepper motor (18c) is arranged between the interconnected partial pistons (18a, 18b)

9. Valve for carrying out a test method according to one of the method claims 1 to 8 with a leak test device according to one of the device claims 4 to 12, wherein the valve is designed as a vacuum control block (16), which comprises three 2/2-way valves (16a, 16b, 16c) controlled via corresponding control lines <V1>, <V2>, <V3>, of which a first valve (16a) is located closest to the adapter (4), a second valve (16b) is spaced apart from the adapter (4) via the first valve (16a) and a third valve (16c) is spaced apart from the adapter (4) via the first (16a) and the second valve (16b).

10. Valve according to claim 9, wherein the first valve (16a) and the second valve (16b) are connected in series and the third valve (16c) is connected in parallel with the first two valves (16a, 16b).

11. Valve according to claim 9 or 10, wherein each valve (16a, 16b, 16) comprises two valve pistons which, in the closed position of the valve, bear sealingly against one another with valve surfaces, in that the valve pistons can be pressed by a control pressure, which is applied via a control line, against a spring which is arranged between the valve pistons in a valve longitudinal axis and which presses the valve pistons against one another outwards against a housing of the vacuum control block (16) into an open position.

12. Valve according to claim 11, wherein a first, stationary valve piston is stationary and a second, movable valve piston is movably arranged in the housing.

13. Valve according to claim 12, wherein the movable valve piston is located closer to the corresponding control line <V1>, <V2>, <V3>.

14. Valve according to claim 13, wherein the movable valve piston comprises a piston passage opening (16f, 16g, 16h) extending transversely to a longitudinal piston axis through the valve piston.

15. Valve according to one of claims 9 to 14, wherein the valve pistons are arranged in openings or bores with piston walls (16d, 16e) enclosing them in the housing of the vacuum control block (16), and that the piston walls (16d, 16e) comprise wall openings (16i, 16j) for the passage of a pressure applied to the valve, which are arranged either at the level of the piston passage openings (16f, 16g, 16h) of the movable valve pistons or at the level of the valve surfaces between two adjacent valves (16a, 16b, 16c).

**Revendications**

1. Procédé de contrôle pour contrôler une éprouvette comprenant un câble qui est réalisé ouvert à une extrémité avant, de sorte qu'un côté intérieur du câble est accessible, et qui, à une extrémité arrière du câble, présente un raccord de câble étanche pour la liaison avec un élément,

   dans lequel, au moyen d'une unité de génération de pression, une pression de contrôle est générée dans l'éprouvette pour effectuer une mesure de différence de pression au moyen d'un capteur de pression (10), **caractérisé en ce que** l'extrémité avant, le cas échéant dénudée, du câble est introduite dans un adaptateur (4), **en ce que** la pression de contrôle est appliquée par l'unité de génération de pression, et un volume de référence ($V_2$) à l'intérieur d'une cellule de mesure qui inclut l'espace à l'intérieur de l'éprouvette et de l'adaptateur, muni du capteur de pression raccordé, jusqu'à une vanne, est déterminé automatiquement, **en ce que** la cellule de mesure est découplée de l'unité de génération de pression au moyen de la vanne (8, 16), et **en ce qu'**un taux de fuite de l'éprouvette dans la cellule de mesure est déterminé à l'aide d'un procédé de différence de pression.

2. Procédé de contrôle selon la revendication 1,
   dans lequel le volume de référence ($V_2$) inclut le volume à l'intérieur de l'adaptateur (4) et le volume à l'intérieur de l'éprouvette.

3. Procédé de contrôle selon la revendication 1 ou 2,
   dans lequel la cellule de mesure inclut les volumes à l'intérieur de l'éprouvette, de l'adaptateur fermé (4) recevant l'éprouvette, du capteur de pression (10) et des conduites reliant éventuellement ces composants jusqu'à la vanne (8, 16).

4. Dispositif de contrôle d'étanchéité pour mettre en œuvre automatiquement le procédé de contrôle selon une ou plusieurs des revendications de procédé précédentes, comprenant une unité de génération de pression conçue pour générer une dépression ou une surpression ainsi qu'une cellule de mesure conçue pour recevoir une éprouvette dont l'étanchéité doit être contrôlée, comprenant un câble avec une extrémité avant ouverte et un élément relié à une extrémité arrière de l'éprouvette au moyen d'une liaison étanche,
   **caractérisé en ce que** la cellule de mesure comprend au moins un adaptateur (4) ouvert d'un côté avec une ouverture d'enfichage (4a) conçue pour recevoir par enfichage l'extrémité avant de l'éprouvette, **en ce que** l'unité de génération de pression est conçue pour évacuer tout d'abord l'air contenu à l'intérieur de la cellule de mesure et pour appliquer ensuite une pression de contrôle à l'éprouvette pendant une durée de contrôle déterminée, **en ce que** l'adaptateur (4) comprend un boîtier d'adaptateur s'étendant le long d'un axe longitudinal d'adaptateur et au moins deux bagues d'étanchéité (4d, 4e) disposées l'une derrière l'autre dans le boîtier d'adaptateur, **en ce qu'**un piston agissant sur les bagues d'étanchéité (4d, 4e) est disposé de manière mobile par rapport au boîtier d'adaptateur, **en ce que** les bagues d'étanchéité (4d, 4e) peuvent être comprimées par un actionnement du piston, et **en ce qu'**un ressort de rappel (4i) est disposé entre le boîtier d'adaptateur et le piston.

5. Dispositif de contrôle d'étanchéité selon la revendication 4,
   dans lequel les bagues d'étanchéité (4d, 4e) sont entourées de rondelles de pression (4i, 4j, 4k).

6. Dispositif de contrôle d'étanchéité selon la revendication 4 ou 5,
   dans lequel le piston comprend un corps interne (4f) et une rondelle (4g) élargie par rapport au corps interne (4f).

7. Dispositif de contrôle d'étanchéité selon l'une des revendications 4 à 6, dans lequel le dispositif de génération de pression comprend une pompe à vide à piston avec plusieurs, en particulier deux pistons partiels (18a, 18b) reliés entre eux.

8. Dispositif de contrôle d'étanchéité selon la revendication 7,
   dans lequel le moteur pas à pas (18c) est disposé entre les pistons partiels (18a, 18b) reliés entre eux.

9. Vanne pour mettre en œuvre un procédé de contrôle selon l'une des revendications de procédé 1 à 8 avec un dispositif de contrôle d'étanchéité selon l'une des revendications de dispositif 4 à 12, la vanne étant conçue comme un bloc de commande de vide (16) qui comprend trois vannes à 2 voies/2 positions (16a, 16b, 16c) qui sont commandées par l'intermédiaire de conduites de commande correspondantes <V1>, <V2>, <V3> et dont une première vanne (16a) est située au plus près de l'adaptateur (4), une deuxième vanne (16b) est espacée de l'adaptateur (4) via la première vanne (16a), et une troisième vanne (16c) est espacée de l'adaptateur (4) via la première (16a) et la deuxième vanne (16b).

10. Vanne selon la revendication 9,
dans laquelle la première vanne (16a) et la deuxième vanne (16b) sont connectées en série et la troisième vanne (16c) est connectée en parallèle avec les deux premières vannes (16a, 16b).

11. Vanne selon la revendication 9 ou 10,
dans laquelle chaque vanne (16a, 16b, 16) comprend deux pistons de vanne qui sont en appui l'un contre l'autre de manière étanche par des surfaces de vanne dans la position de fermeture de la vanne, en ce que les pistons de vanne peuvent être pressés par une pression de commande, appliquée via une conduite de commande, contre un ressort disposé entre les pistons de vanne selon un axe longitudinal de vanne, lequel presse les pistons de vanne l'un contre l'autre vers l'extérieur contre un boîtier du bloc de commande de vide (16) dans une position d'ouverture.

12. Vanne selon la revendication 11,
dans laquelle un premier piston de vanne fixe est disposé de manière fixe et un deuxième piston de vanne mobile est disposé de manière mobile dans le boîtier.

13. Vanne selon la revendication 12,
dans laquelle le piston de vanne mobile est situé plus près de la conduite de commande correspondante <V1>, <V2>, <V3>.

14. Vanne selon la revendication 13,
dans laquelle le piston de vanne mobile présente un orifice de passage de piston (16f, 16g, 16h) s'étendant transversalement à un axe longitudinal de piston, transversalement à travers le piston de vanne.

15. Vanne selon l'une des revendications 9 à 14,
dans laquelle les pistons de vanne sont disposés dans des orifices ou des alésages, ayant des parois de piston (16d, 16e) les entourant, dans le boîtier du bloc de commande de vide (16), et en ce que les parois de piston (16d, 16e) présentent des ouvertures de paroi (16i, 16j) pour le passage d'une pression appliquée à la vanne, qui sont disposées soit au niveau des orifices de passage de piston (16f, 16g, 16h) des pistons de vanne mobiles, soit au niveau des surfaces de vanne entre deux vannes adjacentes (16a, 16b, 16c).

EP 3 830 539 B1

Fig. 1

Fig. 2

**Fig. 3**

**Fig. 4**

**Fig. 5**

SCHNITT B-B

**Fig. 6**

# Prinzip Prozessablauf Vakuumdichtheitsprüfgerät

**Fig. 7**

Veranschaulichung Druck und Volumen Prinzipskizze Vakuumdichtheitsprüfung / Leckagebestimmung

Fig. 8

Fig. 9

Fig. 10

EP 3 830 539 B1

Fig. 11

**IN DER BESCHREIBUNG AUFGEFÜHRTE DOKUMENTE**

**In der Beschreibung aufgeführte Patentdokumente**

- DE 202016104484 U1
- DE 20308615 U1
- DE 102016107216 A1
- US 4811252 A
- CN 107884143 A
- JP 05215588 A
- US 8201438 B1